# EUROPEAN PATENT APPLICATION

(11) **EP 4 541 778 A1**
(43) Date of publication of application: **23.04.2025**
(21) Application number: 23827371.8
(22) Date of filing: 10.05.2023
(51) Int. Cl.: C03C 17/34, C03B 23/00, B32B 17/10, B32B 7/12, B32B 38/00

(54) **WINDOW GLASS, ELECTRONIC DEVICE COMPRISING SAME, AND METHOD FOR MANUFACTURING WINDOW GLASS**

(30) Priority: 20.06.2022 KR 20220075122; 01.07.2022 KR 20220081409
(71) Applicant: Samsung Electronics Co., Ltd., Suwon-si, Gyeonggi-do 16677 (KR)
(72) Inventor: PARK, Gijea, Suwon-si Gyeonggi-do 16677 (KR); SIN, Wanju, Suwon-si Gyeonggi-do 16677 (KR); KIM, Hakju, Suwon-si Gyeonggi-do 16677 (KR); CHOI, Jongmun, Suwon-si Gyeonggi-do 16677 (KR); CHOI, Hyunsuk, Suwon-si Gyeonggi-do 16677 (KR)
(74) Representative: Walaski, Jan Filip
(86) International application number: PCT/KR2023/006337
(87) International publication number: WO 2023/249251

(57) **Abstract**

Disclosed is window glass including: a glass layer, and a deposition layer disposed on the rear surface of the glass layer, wherein the deposition layer includes: a first source layer formed on the surface of the glass layer and including a silicon oxide; a second source layer laminated on the rear surface of the first source layer and including a material having a higher optical refractive index than the silicon oxide; and a third source layer stacked on the rear surface of the second source layer and including the silicon oxide. Other various embodiments identified through the present document are possible.

## Description

### [Technical Field]

The disclosure relates to window glass, an electronic device including window glass, and a method for manufacturing window glass.

### [Background Art]

An electronic device such as a smart phone can include a display for displaying various contents. In addition, the electronic device can include window glass for protecting the display. Such window glass can have at least a portion of a curved shape for the sake of improved aesthetics and a comfortable grip when holding the electronic device with a hand.

### [Disclosure of Invention]

### [Technical Problem]

In a conventional method for manufacturing window glass, a color can be implemented by molding at least a portion of glass in a curved shape and then forming a thin film on the rear surface of the glass through deposition. In this case, when the window glass implements the color through the deposition, the thickness of the deposited thin film may not be uniform in a curved portion (or bent portion) due to the straightness of the deposition. Accordingly, the window glass can have the dichroic phenomenon (e.g., two-tone phenomenon) in the curved portion, and can be difficult in color matching when being combined with a front metal.

Various embodiments of the disclosure may present window glass, an electronic device including window glass, and a method for manufacturing window glass, implemented by forming a thin film on the rear surface of glass through deposition and then molding at least a portion of the glass in a curved shape.

### [Solution to Problem]

Window glass of various embodiments of the disclosure may include a glass layer, and a deposition layer disposed on the rear surface of the glass layer. The deposition layer may include a first source layer formed on the surface of the glass layer and including a silicon oxide (SiO₂), a second source layer laminated on the rear surface of the first source layer and including a material having a higher optical refractive index than the silicon oxide (SiO₂), and a third source layer laminated on the rear surface of the second source layer and including the silicon oxide (SiO₂).

Also, an electronic device of various embodiments of the disclosure may include a housing including window glass including a curved portion bending and extending from one surface of the electronic device toward the other surface of the electronic device while forming the one surface of the electronic device, and a plate forming the other surface of the electronic device, and a display arranged between the window glass and the plate. The window glass may include a glass layer and a deposition layer disposed on the rear surface of the glass layer. The deposition layer may include a first source layer formed on the surface of the glass layer and including a silicon oxide (SiO₂), a second source layer laminated on the rear surface of the first source layer and including a first material having a higher optical refractive index than the silicon oxide (SiO₂), and a third source layer laminated on the rear surface of the second source layer and including the silicon oxide (SiO₂).

Also, a method for manufacturing window glass of various embodiments of the disclosure may include a deposition process for forming a deposition layer on the rear surface of glass through an inductively coupled plasma (ICP) sputtering method, and a molding process for molding, bending, and extending, toward the rear surface of the glass, at least one side edge portion of the glass on which the deposition layer is formed.

### [Advantageous Effects of Invention]

According to various embodiments of the disclosure, window glass may be presented in which, by forming a thin film on the rear surface of glass through deposition and then molding at least a portion of the glass in a curved shape, the thickness of the deposited thin film is uniform not only on a flat portion but also on a curved portion.

In addition, according to various embodiments of the disclosure, since the thickness of the deposited thin film is uniform not only on the flat portion but also on the curved portion, the dichroic phenomenon may be prevented and the wavelength-specific reflectivity of light may be presented uniformly.

In addition, various effects directly or indirectly identified through this document may be presented.

### [Brief Description of Drawings]

FIG. 1 is a block diagram of an electronic device in a network environment according to various embodiments of the disclosure.
FIG. 2 is a perspective view illustrating a front surface of an electronic device according to an embodiment of the disclosure.
FIG. 3 is a perspective view illustrating a back surface of an electronic device according to an embodiment of the disclosure.
FIG. 4 is a diagram for explaining a part of a method for manufacturing window glass according to an embodiment of the disclosure.
FIG. 5 is a diagram for explaining a part of a method for manufacturing window glass including a plurality of glass according to an embodiment of the disclosure.
FIG. 6 is a diagram for explaining a deposition layer of window glass according to an embodiment of the disclosure.
FIG. 7 is a diagram for explaining a deposition layer of window glass including a plurality of source layers including materials having different optical refractive indices according to an embodiment of the disclosure.
FIG. 8 is a diagram for explaining window glass and a film applied to the window glass according to an embodiment of the disclosure.
FIG. 9 is a diagram for explaining a deposition layer of window glass including a source layer including a material having a light shielding ratio of a specified level or more according to an embodiment of the disclosure.
FIG. 10 is a diagram for explaining a deposition layer of window glass including a plurality of source layers including materials having different optical refractive indices and a source layer including a material having a light shielding ratio of a specified level or more according to an embodiment of the disclosure.
FIG. 11 is a diagram for explaining window glass including a source layer including a material having a light shielding ratio of a specified level or more and a film applied to the window glass according to an embodiment of the disclosure.
FIG. 12 is a diagram for explaining a deposition layer of window glass including a plurality of glass according to an embodiment of the disclosure.
FIG. 13 is a diagram for explaining a deposition layer of window glass including a plurality of glass and including a plurality of source layers including materials having different optical refractive indices according to an embodiment of the disclosure.
FIG. 14 is a diagram for explaining window glass including a plurality of glass and a film applied to the window glass according to an embodiment of the disclosure.
FIG. 15 is a diagram for explaining a deposition layer of window glass including a plurality of glass and including a source layer including a material having a light shielding ratio of a specified level or more according to an embodiment of the disclosure.
FIG. 16 is a diagram for explaining a deposition layer of window glass including a plurality of glass and including a plurality of source layers including materials having different optical refractive indices and a source layer including a material having a light shielding ratio of a specified level or more according to an embodiment of the disclosure.
FIG. 17 is a diagram for explaining window glass including a plurality of glass and a source layer including a material having a light shielding ratio of a specified level or more, and a film applied to the window glass according to an embodiment of the disclosure.
FIG. 18 is a diagram for explaining a method for manufacturing window glass according to an embodiment of the disclosure.
FIG. 19 is a diagram for explaining a method for manufacturing window glass including a plurality of glass according to an embodiment of the disclosure.

In relation to the description of the drawings, the same or similar reference numerals may be used for the same or similar components.

### [Mode for the Invention]

Various embodiments of the disclosure are described below with reference to the attached drawings. For the convenience of explanation, the components illustrated in the drawings may be exaggerated or reduced in size, and the disclosure is not necessarily limited by what is illustrated.

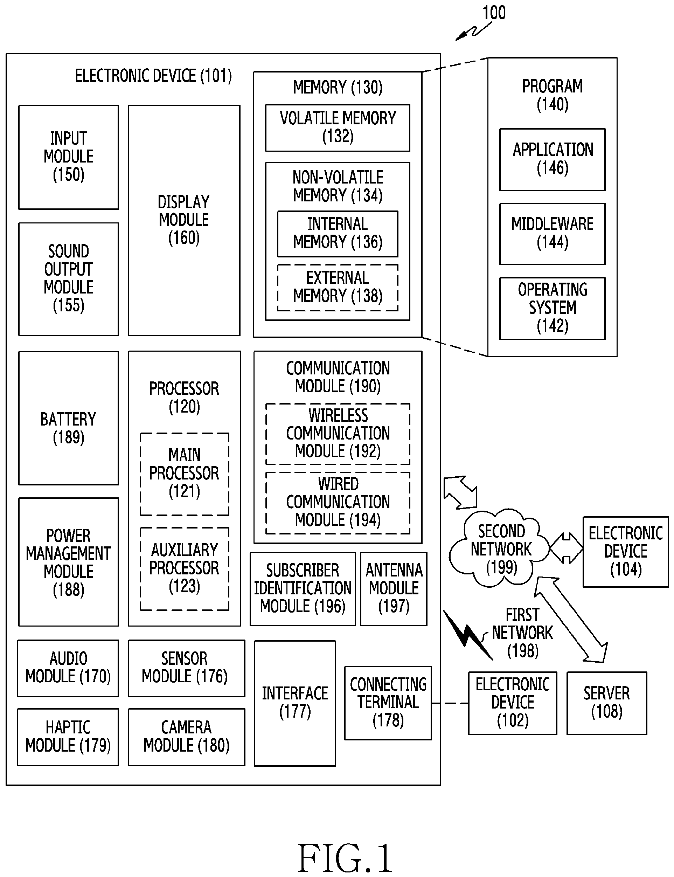

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

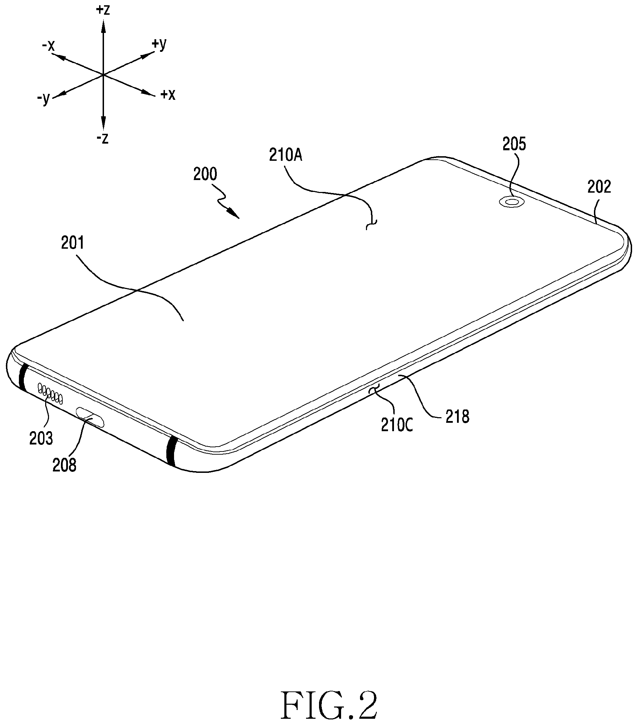

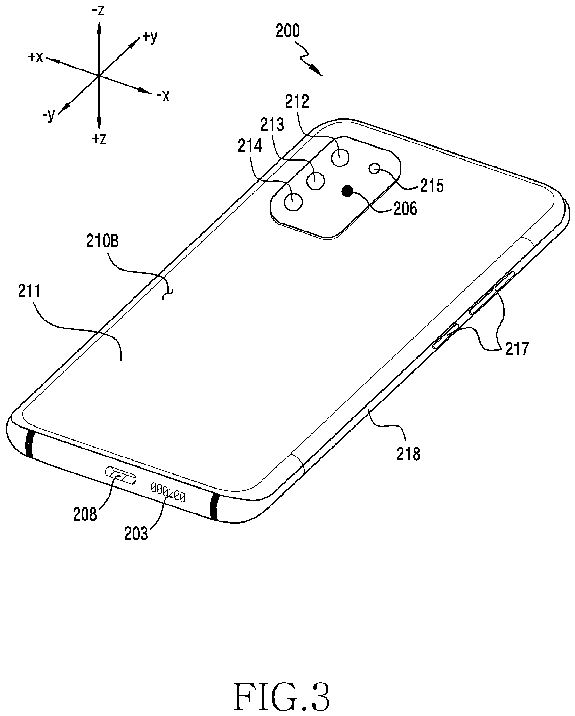

FIG. 2 is a perspective view illustrating a front surface of an electronic device according to an embodiment of the disclosure, and FIG. 3 is a perspective view illustrating a back surface of an electronic device according to an embodiment of the disclosure.

Referring to FIGS. 2 and 3, an electronic device 200 of an embodiment (e.g., electronic device 101 of FIG. 1) may include a housing 210 that includes a first surface (or "front surface") 210A, a second surface (or "back surface") 210B, and a side surface (or "lateral wall") 210C surrounding a space between the first surface 210A and the second surface 210B. In another embodiment, the housing 210 may also refer to a structure forming a portion of the first surface 210A, the second surface 210B, and the side surface 210C of FIGS. 2 and 3.

According to an embodiment, the first surface 210A may be formed by a front plate 202 that is at least partially substantially transparent (e.g., glass plate including various coating layers, or polymer plate). According to an embodiment, the front plate 202 may include a curved portion that extends seamlessly from the first surface 210A toward the second surface 210B (e.g., back plate 211) at least at one side edge portion.

According to an embodiment, the second surface 210B may be formed by a substantially opaque back plate 211. The back plate 211 may be formed by, for example, a coated or colored glass, ceramic, polymer, metal (e.g., aluminum, stainless steel (STS) or magnesium), or a combination of at least two of the foregoing materials. According to an embodiment, the back plate 211 may include a curved portion that extends seamlessly from the second surface 210B toward the first surface 210A (e.g., front plate 202) at least at one side edge portion.

According to an embodiment, the side surface 210C may be coupled with the front plate 202 and the back plate 211, and be formed by a side member (or "bracket") 218 including a metal and/or polymer. In some embodiment, the back plate 211 and the side member 218 may be formed integrally and include the same material (e.g., metal material such as aluminum).

According to an embodiment, the electronic device 200 may include at least one or more of a display 201, an audio module 203, a sensor module (not shown), a camera module 205, 212, 213, 214, 215, or 206, a key input device 217, and a connector hole 208. In some embodiment, the electronic device 200 may omit at least one (e.g., key input device 217) of the components or may additionally include other components. In an example, the electronic device 200 includes a sensor module that is not shown. For example, the sensor module may be disposed on a back surface of a screen display area of the display 201 that is visible to the outside of the electronic device 200 through the front plate 202. For example, at least one of an optical sensor, an ultrasonic sensor, or a capacitive sensor may be disposed on the back surface of the screen display area of the display 201, but is not limited thereto. In some embodiment, the electronic device 200 may further include a light-emitting element, and the light-emitting element may be arranged at a position adjacent to the display 201 within an area presented by the front plate 202. The light-emitting element may present, for example, status information of the electronic device 200 in the form of light. According to an embodiment, the light-emitting element may present, for example, a light source that is linked to the operation of the camera module 205. The light-emitting element may include, for example, an LED, an IR LED, and/or a xenon lamp.

The display 201 may be visible to the outside of the electronic device 200, for example, through a significant portion of the front plate 202. In an embodiment, the edge of the display 201 may be formed substantially identically to an adjacent outer shape (e.g., curved surface) of the front plate 202.

In an embodiment, the electronic device 200 may include a recess, notch, or opening that is formed in a portion of the screen display area of the display 201. The electronic device 200 may include an electronic component, for example, a camera module 205 or a sensor module (not shown), aligned with the recess, notch, or opening. In an embodiment, the electronic device 200 may include at least one or more of a camera module (e.g., 212, 213, 214, or 215), a fingerprint sensor, and a flash (e.g., 206) on the back surface of the screen display area of the display 201. In an embodiment, the display 201 may be coupled with or adjacent to a touch detection circuit, a pressure sensor capable of measuring the intensity (pressure) of a touch, and/or a digitizer detecting a magnetic field-type stylus pen.

The audio module 203 may include a microphone hole and a speaker hole. A microphone for acquiring external sounds may be arranged inside the microphone hole, and in some embodiment, a plurality of microphones may be arranged and detect the direction of sounds. In some embodiment, the speaker hole and the microphone hole may be implemented as one hole, or a speaker (e.g., piezo speaker) may be included without the speaker hole. The speaker hole may include an external speaker hole and a receiver hole for call.

The electronic device 200 may include a sensor module not shown, and generate an electrical signal or data value corresponding to an internal operating state or an external environmental state. The sensor module may include, for example, a proximity sensor disposed on the first surface 210A of the housing 210, a fingerprint sensor disposed on the back surface of the display 201, and/or a biometric sensor (e.g., HRM sensor) disposed on the second surface 210B of the housing 210. The electronic device 200 may further include at least one of a sensor module not shown, for example, a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 205, 212, 213, 214, 215, and 206 may include a first camera device 205 disposed on the first surface 210A of the electronic device 200, a second camera device 212, 213, 214, or 215 disposed on the second surface 210B, and/or a flash 206. The camera devices 205, 212, 213, 214, and 215 described above may include one or more lenses, image sensors, and/or image signal processors. The flash 206 may include, for example, a light-emitting diode or a xenon lamp. In some embodiment, two or more lenses (infrared camera, wide-angle and telephoto lenses) and image sensors may be disposed on one surface of the electronic device 200.

The key input device 217 may be disposed on the side surface 210C of the housing 210. In another embodiment, the electronic device 200 may not include some or all of the above-mentioned key input devices 217, and the key input device 217 not included may be implemented in other forms, such as soft keys, on the display 201. In some embodiment, the key input device 217 may include at least a portion of a fingerprint sensor disposed on the second surface 210B of the housing 210.

The connector hole 208 may accommodate a connector for transmitting and receiving power and/or data to and from an external electronic device, and/or a connector for transmitting and receiving audio signals to and from the external electronic device. For example, the connector hole 208 may include a USB connector or an earphone jack. In an embodiment, the USB connector and the earphone jack may be implemented in a single hole (e.g., 208 of FIGS. 2 and 3). According to an embodiment, the electronic device 200 may transmit and receive power and/or data, or transmit and receive audio signals, with the external electronic device (e.g., electronic device 102 or 104) of FIG. 1 without a separate connector hole.

In the disclosure, the +z direction side of FIGS. 2 and 3 is referred to as the front surface, the -z direction side of FIGS. 2 and 3 is referred to as the back surface (or rear surface), the +y direction of FIGS. 2 and 3 is referred to as the top side, and the -y direction of FIGS. 2 and 3 is referred to as the bottom side.

In the following description, the window glass may correspond to the front plate 202 of FIGS. 2 and 3, but is not limited thereto. According to an embodiment, the window glass may also form at least a part of the second surface 210B of FIGS. 2 and 3. In addition, in the following description, the window glass may include a curved portion that is bent and extended from one surface of an electronic device toward the other surface (e.g., rear surface) of the electronic device while forming one surface (e.g., front surface) of the electronic device (e.g., electronic device 200 of FIGS. 2 and 3). Accordingly, the window glass may be referred to as 3D glass.

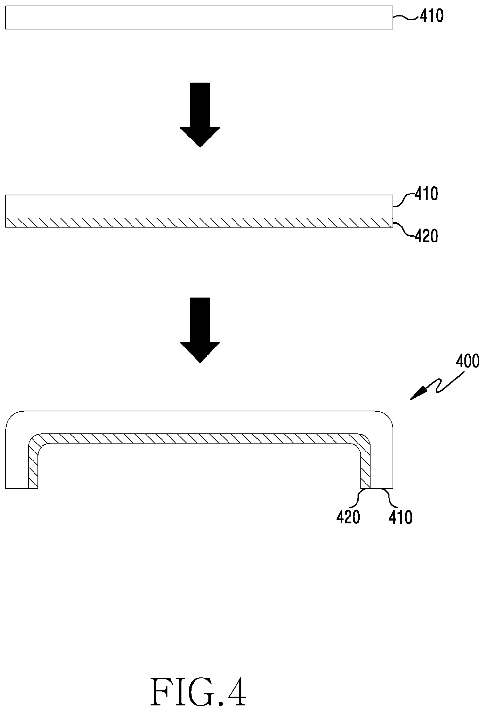

FIG. 4 is a diagram for explaining a part of a method for manufacturing window glass according to an embodiment of the disclosure.

Referring to FIG. 4, the method for manufacturing window glass 400 (e.g., front plate 202 of FIGS. 2 and 3) may include a deposition process for forming a thin film (e.g., deposition layer 420) on the rear surface of glass (e.g., glass layer 410) and a molding process for molding, bending and extending, toward the rear surface of the glass, at least one side edge portion of the glass on which the thin film is formed. By forming the thin film on the rear surface of the glass through the deposition process and then performing the molding process of molding at least a portion of the glass in a curved shape, window glass 400 may be presented in which the thickness of the deposited thin film is uniform not only on a flat portion but also on a curved portion. Accordingly, the window glass 400 may be presented in which the dichroic phenomenon in the curved portion is prevented and even the wavelength-specific reflectivity of light is uniform.

According to an embodiment, the deposition process may use an inductively coupled plasma (ICP) sputtering method. For example, in the deposition process, the thin film may be formed on the rear surface of the glass through the ICP sputtering method. The ICP sputtering method is a type of physical vapor deposition (PVD) method, and may include a method in which while a drum rotates at high speed, a material sputtered with primary ions (e.g., Ar⁺) is deposited on glass and then reacts with plasma gas in a plasma source zone and thus forms an oxide or nitride.

In order to form a uniformly thick deposited thin film (e.g., deposition layer 420), the deposition process may be first performed on 2D glass (e.g., glass layer 410) and then the glass on which the thin film is formed may be thermally molded through the molding process and thus 3D glass (e.g., window glass 400) may be manufactured. According to an embodiment, the thin film may be formed by including one of a silicon oxide (SiO₂) and a silicon nitride (Si₃N₄) or a combination thereof. According to an embodiment, for the sake of adhesion improvement, the deposited thin film may include a first source layer formed on the surface of glass and including a silicon oxide (SiO₂), a second source layer laminated on the rear surface of the first source layer and including a material having a higher optical refractive index than the silicon oxide (SiO₂), and a third source layer laminated on the rear surface of the second source layer and including the silicon oxide (SiO₂). According to an embodiment, at least one fourth source layer including the silicon oxide (SiO₂) and at least one fifth source layer including a material having a higher optical refractive index than the silicon oxide (SiO₂) may be alternately further laminated between the second source layer and the third source layer. The material having a higher optical refractive index than the silicon oxide (SiO₂) may include, for example, at least one of a silicon nitride (Si₃N₄) and a titanium oxide (Ti₃O₅). However, the material is not limited thereto.

When a source layer having an optical refractive index less than a specified level such as a silicon oxide (SiO₂), and a source layer having an optical refractive index of the specified level or more such as a silicon nitride (Si₃N₄) or a titanium oxide (Ti₃O₅), are alternately laminated on the thin film, the reflectivity of a specific wavelength band of light may be controlled (e.g., increased or decreased) by controlling the thickness of the source layers. That is, since the thickness of the deposition layer 420 of the window glass 400 becomes uniform not only on the flat portion but also on the curved portion by performing the molding process after the deposition process, the wavelength-specific reflectivity of light in the curved portion may be applied identically to the wavelength-specific reflectivity of light in the flat portion.

According to an embodiment, the thin film may include a sixth source layer including a material having a light shielding ratio of a specified level or more. For example, the sixth source layer may be arranged between the second source layer and the third source layer. The material having a light shielding ratio of the specified level or more may include, for example, silicon (Si). When the silicon (Si) is included in the deposition layer 420, the existing film (e.g., decorative film) laminated to the back surface (rear surface) of the window glass 400 may be omitted. In this case, the window glass 400 may include a film or printing layer for preventing scattering instead of the decorative film. Accordingly, the cost of the product may be reduced, and the effect capable of reducing the total thickness may be presented. According to an embodiment, the thickness of the sixth source layer including the silicon (Si) may be about 6 nm or less. This is because when the thickness of the sixth source layer including the silicon (Si) exceeds the specified level (e.g., 6 nm), the conductivity of the silicon (Si) may cause interference in radio communication of an electronic device.

According to an embodiment, at least one seventh source layer including the silicon oxide (SiO₂), at least one eighth source layer including a material having a higher optical refractive index than the silicon oxide (SiO₂), and at least one ninth source layer including the silicon (Si) may be alternately further laminated between the sixth source layer and the third source layer. In this case, the thickness of the sixth source layer and the at least one ninth source layer each including the silicon (Si) may be about 6 nm or less. In addition, the number of source layers including the silicon (Si) may be three or less. For example, the deposition layer 420 may include the sixth source layer and two or less ninth source layers.

The molding process may include a process of molding, bending, and extending, toward the rear surface of the glass, at least one side edge portion of the glass on which the thin film is formed. The molding process may include an inputting step, a preheating step, a molding step, and a cooling step. In addition, equipment for performing the molding process may be a single equipment and may be operated in an inline manner. A molding temperature in the molding step may have a range of, for example, 650 degrees to 760 degrees, but is not limited thereto, and various temperatures may be selected depending on a material included in the deposition layer 420, i.e., a thin film material. In an example, when the material included in the deposition layer 420 includes a silicon oxide (SiO₂) and a silicon nitride (Si₃N₄), the molding temperature may be selected as a thermal molding temperature from a range of about 650 degrees to about 760 degrees or more, which is a molding temperature of glass, to a sintering temperature (e.g., 70% of a melting point) or less of the thin film material. In general, since the movement or flow of atoms constituting the material may occur at the sintering temperature or more, a thermal molding temperature corresponding to the sintering temperature or more of the thin film material may be required for molding the thin film together with the glass, but in reality, molding the thin film material may be possible even at a temperature much lower than the sintering temperature. This is because the thickness of the thin film is in the nano-unit, which is a very thin state, and because usually, when material becomes nano-sized, its physical properties are different from those in a bulk state.

According to an embodiment, in the molding process, a curvature (R) value of the curved portion of the window glass 400 may be considered. For example, when a curvature of the curved portion of the window glass 400 is greater than a specified value during thermal molding of the glass on which the thin film is formed, a crack may occur in the thin film. Accordingly, in the molding process, the curvature value of the curved portion of the window glass 400 may be set to be within about 4.5. However, the curvature value of the curved portion of the window glass 400 is not limited thereto. According to an embodiment, the curvature value of the curved portion of the window glass 400 may be set differently depending on the type of the thin film material.

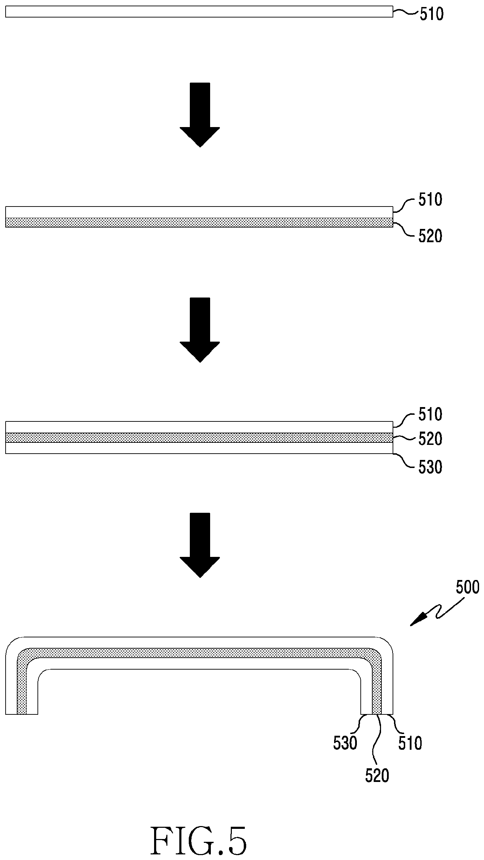

FIG. 5 is a diagram for explaining a part of a method for manufacturing window glass including a plurality of glass according to an embodiment of the disclosure.

Referring to FIG. 5, a method for manufacturing window glass 500 (e.g., front plate 202 of FIGS. 2 and 3) may include a deposition process for forming a thin film (e.g., deposition layer 520) on the rear surface of a first glass (e.g., first glass layer 510), an attachment process for attaching a second glass (e.g., second glass layer 530) to the rear surface of the thin film, and a molding process for molding, bending, and extending, toward the rear surface of the window glass 500, at least one side edge portion of the window glass 500 including the first glass, the thin film, and the second glass. By forming the thin film on the rear surface of the first glass through the deposition process, attaching the second glass to the rear surface of the thin film, and then performing the molding process of molding at least a portion of the window glass 500 in a curved shape, the window glass 500 may be presented in which the thickness of the deposited thin film is uniform not only on a flat portion but also on a curved portion. Accordingly, the window glass 500 may be presented in which the dichroic phenomenon in the curved portion is prevented and the wavelength-specific reflectivity of light is uniform. In addition, since the window glass 500 includes the second glass paired with the first glass, a tensile or compressive stress may be reduced during the thermal molding of the window glass 500 and present an effect of preventing cracks from occurring in the curved portion.

The deposition process may be the same as or similar to the deposition process described in FIG. 4. For example, the deposition process may use an ICP type sputtering method. According to an embodiment, the thin film may be formed by including one of a silicon oxide (SiO₂) and a silicon nitride (Si₃N₄) or a combination thereof. According to an embodiment, the deposited thin film may include a first source layer including a silicon oxide (SiO₂) and formed on the surface of the first glass and improving adhesion to the first glass, a second source layer including a material having a higher optical refractive index than the silicon oxide (SiO₂) and laminated on the rear surface of the first source layer, and a third source layer including the silicon oxide (SiO₂) and laminated on the rear surface of the second source layer and improving adhesion to the second glass. According to an embodiment, at least one fourth source layer including the silicon oxide (SiO₂) and at least one fifth source layer including a material having a higher optical refractive index than the silicon oxide (SiO₂) may be alternately further laminated between the second source layer and the third source layer. The material having a higher optical refractive index than the silicon oxide (SiO₂) may include, for example, at least one of a silicon nitride (Si₃N₄) and a titanium oxide (Ti₃O₅). However, the material is not limited thereto.

When a source layer having an optical refractive index less than a specified level such as a silicon oxide (SiO₂), and a source layer having an optical refractive index of the specified level or more such as a silicon nitride (Si₃N₄) or a titanium oxide (Ti₃O₅), are alternately laminated on the thin film, the reflectivity of a specific wavelength band of light may be controlled (e.g., increased or decreased) by controlling the thickness of the source layers. That is, since the thickness of the thin film of the window glass 500 becomes uniform not only on the flat portion but also on the curved portion by performing the molding process after the deposition process, the wavelength-specific reflectivity of light in the curved portion may be applied identically to the wavelength-specific reflectivity of light in the flat portion.

According to an embodiment, the thin film may include a sixth source layer including a material having a light shielding ratio of a specified level or more. For example, the sixth source layer may be arranged between the second source layer and the third source layer. The material having a light shielding ratio of the specified level or more may include, for example, silicon (Si). When the silicon (Si) is included in the deposition layer 520, the existing film (e.g., decorative film) laminated to the back surface of the window glass 500 may be omitted. In this case, the window glass 500 may include a film or printing layer for preventing scattering instead of the decorative film. Accordingly, the cost of the product may be reduced, and the effect capable of reducing the total thickness may be presented. According to an embodiment, the thickness of the sixth source layer including the silicon (Si) may be about 6 nm or less. This is because when the thickness of the sixth source layer including the silicon (Si) exceeds the specified level (e.g., 6 nm), the conductivity of the silicon (Si) may cause interference in radio communication of an electronic device.

According to an embodiment, at least one seventh source layer including a silicon oxide (SiO₂), at least one eighth source layer including a material having a higher optical refractive index than the silicon oxide (SiO₂), and at least one ninth source layer including silicon (Si) may be alternately further laminated between the sixth source layer and the third source layer. In this case, the thickness of the sixth source layer and the at least one ninth source layer each including the silicon (Si) may be about 6 nm or less. In addition, the number of source layers including the silicon (Si) may be three or less. For example, the deposition layer 520 may include the sixth source layer and two or less ninth source layers.

The molding process may be the same as or similar to the molding process described in FIG. 4. For example, the molding process may include an inputting step, a preheating step, a molding step, and a cooling step. In addition, equipment for performing the molding process may be a single equipment and may be operated in an inline manner. A molding temperature in the molding step may have a range of, for example, 650 degrees to 760 degrees, but is not limited thereto, and various temperatures may be selected depending on a material included in the deposition layer 520, that is, a thin film material.

According to an embodiment, in the molding process, a curvature (R) value of the curved portion of the window glass 500 may be considered. For example, when the window glass 500 is thermally molded, if a curvature of the curved portion of the window glass 500 exceeds a specified value, a crack may occur in the thin film. Accordingly, in the molding process, the curvature value of the curved portion of the window glass 500 may be set to be within about 4.5. However, the curvature value of the curved portion of the window glass 500 is not limited thereto. According to an embodiment, the curvature value of the curved portion of the window glass 500 may be set differently depending on the type of the thin film material.

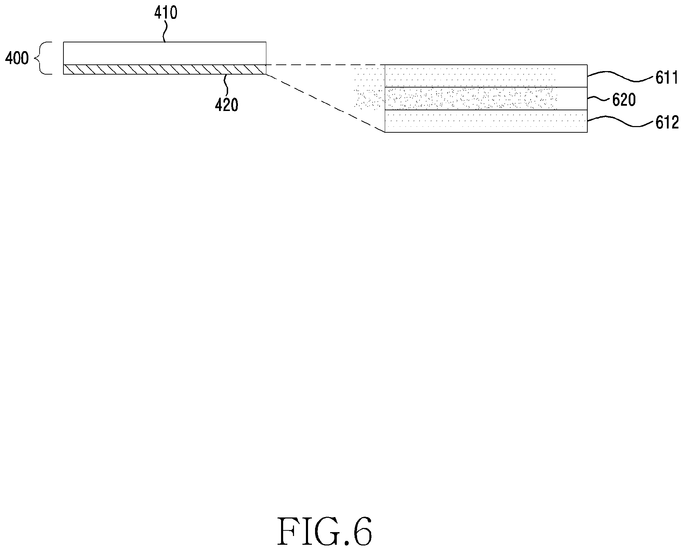

FIG. 6 is a diagram for explaining a deposition layer of window glass according to an embodiment of the disclosure. The window glass 400 of FIG. 6 may be prepared through the manufacturing method of FIG. 4 described above.

Referring to FIG. 6, the window glass 400 may include a glass layer 410 and a deposition layer 420. According to an embodiment, the deposition layer 420 may include a thin film formed on the rear surface of the glass layer 410 through a sputtering method.

According to an embodiment, the deposition layer 420 may include a first source layer 611 formed on the surface of the glass layer 410 and including a silicon oxide (SiO₂), a second source layer 620 laminated on the rear surface of the first source layer 611 and including a material having a higher optical refractive index than the silicon oxide (SiO₂), and a third source layer 612 laminated on the rear surface of the second source layer 620 and including the silicon oxide (SiO₂). According to an embodiment, the first source layer 611 may include a silicon oxide (SiO₂) and improve adhesion between the glass layer 410 and the deposition layer 420. According to an embodiment, the material having a higher optical refractive index than the silicon oxide (SiO₂) may include, for example, at least one of a silicon nitride (Si₃N₄) or a titanium oxide (Ti₃O₅). However, the material is not limited thereto.

According to an embodiment, the thickness of the glass layer 410 may be about 0.6 cm. According to an embodiment, when the first source layer 611 and the third source layer 612 include a silicon oxide (SiO₂) and the second source layer 620 includes a silicon nitride (Si₃N₄), the thickness of the first source layer 611 may be about 40 nm, the thickness of the second source layer 620 may be about 110 nm, and the thickness of the third source layer 612 may be about 45 nm.

According to an embodiment, when the first source layer 611 and the third source layer 612 include a silicon oxide (SiO₂) and the second source layer 620 includes a silicon nitride (Si₃N₄), deposition conditions dependent on the materials may be as shown in Table 1 below. However, the deposition conditions are not limited thereto and may be set in various ways depending on a material forming the thin film.

**[Table 1]**

| Material | Start Pressure (Pa) | Temperature (°C) | Si Power (Kw) | Ar (Sccm) | ICP Power (Kw) | ICP O₂ (Sccm) | ICP N₂ (Sccm) |
|---|---|---|---|---|---|---|---|
| SiO₂ | 4.00E-05 | 150 | 13.5 | 300 | 2 | 450 | 0 |
| Si₃N₄ | 4.00E-05 | 150 | 16 | 240 | 1.5 | 0 | 450 |

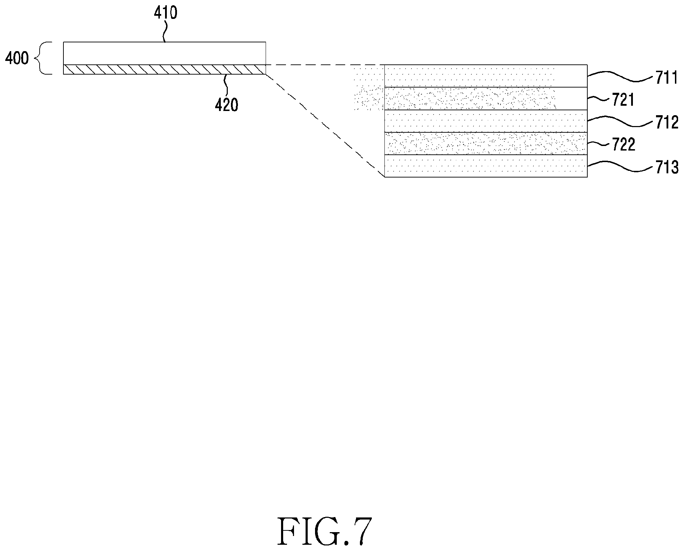

FIG. 7 is a diagram for explaining a deposition layer of window glass including a plurality of source layers including materials having different optical refractive indices according to an embodiment of the disclosure. The window glass 400 of FIG. 7 may be prepared through the manufacturing method of FIG. 4 described above. FIG. 7 may show a structure in which at least one source layer including a silicon oxide (SiO₂) and at least one source layer including a material having a higher optical refractive index than the silicon oxide (SiO₂) are additionally arranged in the structure of the deposition layer 420 of FIG. 6. Referring to FIG. 7, the window glass 400 may include a glass layer 410 and a deposition layer 420. According to an embodiment, the deposition layer 420 may include a thin film formed on the rear surface of the glass layer 410 through a sputtering method.

According to an embodiment, the deposition layer 420 may include a first source layer 711 formed on the surface of the glass layer 410 and including a silicon oxide (SiO₂), a second source layer 721 laminated on the rear surface of the first source layer 711 and including a material having a higher optical refractive index than the silicon oxide (SiO₂), a third source layer 712 laminated on the rear surface of the second source layer 721 and including the silicon oxide (SiO₂), a fourth source layer 722 laminated on the rear surface of the third source layer 712 and including a material having a higher optical refractive index than the silicon oxide (SiO₂), and a fifth source layer 713 laminated on the rear surface of the fourth source layer 722 and including the silicon oxide (SiO₂). For example, compared to the deposition layer 420 of FIG. 6, the deposition layer 420 of FIG. 7 may have a structure in which the third source layer 712 including the silicon oxide (SiO₂) and the fourth source layer 722 including the material having a higher optical refractive index than the silicon oxide (SiO₂) are additionally arranged between the second source layer 721 (e.g., second source layer 620 of FIG. 6) and the fifth source layer 713 (e.g., third source layer 612 of FIG. 6). However, the types and numbers of the additionally arranged source layers are not limited thereto. In an example, a plurality of source layers (e.g., third source layer 712) including the silicon oxide (SiO₂) and a plurality of source layers (e.g., fourth source layer 722) including the material having a higher optical refractive index than the silicon oxide (SiO₂) may be included, and the plurality of source layers including the silicon oxide (SiO₂) and the plurality of source layers including the material having a higher optical refractive index than the silicon oxide (SiO₂) may be alternately laminated between the second source layer 721 and the fifth source layer 713.

According to an embodiment, the first source layer 711 may include a silicon oxide (SiO₂) and improve adhesion between the glass layer 410 and the deposition layer 420. According to an embodiment, the material having a higher optical refractive index than the silicon oxide (SiO₂) may include, for example, at least one of a silicon nitride (Si₃N₄) or a titanium oxide (Ti₃O₅). However, the material is not limited thereto.

When a source layer having an optical refractive index less than a specified level such as a silicon oxide (SiO₂), and a source layer having an optical refractive index of the specified level or more such as a silicon nitride (Si₃N₄) or a titanium oxide (Ti₃O₅), are alternately laminated on the deposition layer 420, the reflectivity of a specific wavelength band of light may be controlled (e.g., increased or decreased) by controlling the thickness of the source layers.

According to an embodiment, the thickness of the glass layer 410 may be about 0.6 cm. According to an embodiment, when the first source layer 711, the third source layer 712, and the fifth source layer 713 include a silicon oxide (SiO₂), and the second source layer 721 and the fourth source layer 722 include a silicon nitride (Si₃N₄), the thickness of the first source layer 711 may be about 40 nm, the thickness of the second source layer 721 may be about 110 nm, the thickness of the third source layer 712 may be about 45 nm, the thickness of the fourth source layer 722 may be about 60 nm, and the thickness of the fifth source layer 713 may be about 25 nm.

According to an embodiment, when the first source layer 711, the third source layer 712, and the fifth source layer 713 include a silicon oxide (SiO₂), and the second source layer 721 and the fourth source layer 722 include a silicon nitride (Si₃N₄), deposition conditions dependent on the materials may be as shown in Table 1 above. However, the deposition conditions are not limited thereto, and may be variously set according to a material forming the thin film.

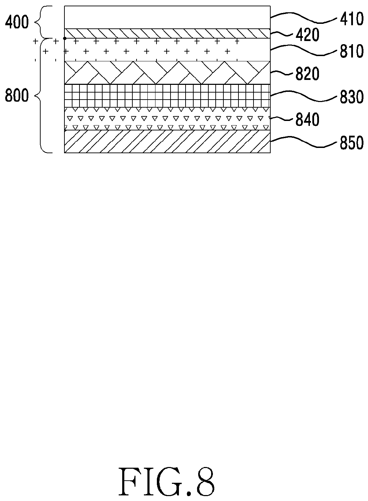

FIG. 8 is a diagram for explaining window glass and a film applied to the window glass according to an embodiment of the disclosure. The window glass 400 of FIG. 8 may correspond to the window glass 400 of FIGS. 6 and 7.

Referring to FIG. 8, a film 800 may be attached (or laminated) to the rear surface of the window glass 400. According to an embodiment, the film 800 may be attached (or laminated) to the rear surface of the window glass 400 in a laminating method.

According to an embodiment, the film 800 may include an adhesive layer 810 for attaching the film 800 to the rear surface of the deposition layer 420, a polyethylene terephthalate (PET) layer 820 laminated on the rear surface of the adhesive layer 810, a UV molding layer 830 laminated on the rear surface of the PET layer 820, a deposition layer 840 laminated on the rear surface of the UV molding layer 830, and a printing layer 850 laminated on the rear surface of the deposition layer 840. However, the construction of the film 800 is not limited thereto. According to an embodiment, the film 800 may omit at least one of the above-described components, and may further include at least one other component.

According to an embodiment, the adhesive layer 810 may include an optically clear adhesive (OCA). According to an embodiment, the PET layer 820 may present a scattering prevention function.

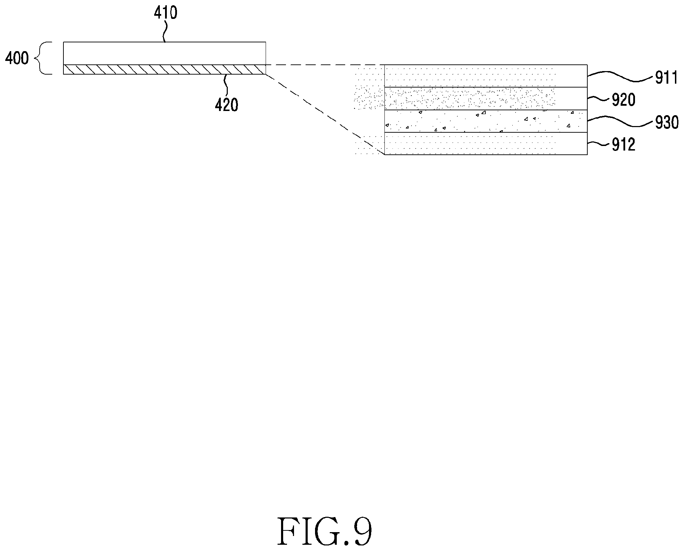

FIG. 9 is a diagram for explaining a deposition layer of window glass including a source layer including a material having a light shielding ratio of a specified level or more according to an embodiment of the disclosure. The window glass 400 of FIG. 9 may be prepared through the manufacturing method of FIG. 4 described above. FIG. 9 may show a structure in which a source layer including a material having a light shielding ratio of a specified level or more is additionally arranged in the deposition layer 420 structure of FIG. 6.

Referring to FIG. 9, the window glass 400 may include a glass layer 410 and a deposition layer 420. According to an embodiment, the deposition layer 420 may include a thin film formed on the rear surface of the glass layer 410 through a sputtering method.

According to an embodiment, the deposition layer 420 may include a first source layer 911 formed on the surface of the glass layer 410 and including a silicon oxide (SiO₂), a second source layer 920 laminated on the rear surface of the first source layer 911 and including a material having a higher optical refractive index than the silicon oxide (SiO₂), a third source layer 930 laminated on the rear surface of the second source layer 920 and including a material having a light shielding ratio of a specified level or more, and a fourth source layer 912 laminated on the rear surface of the third source layer 930 and including the silicon oxide (SiO₂). For example, compared to the deposition layer 420 of FIG. 6, the deposition layer 420 of FIG. 9 may have a structure in which the third source layer 930 including the material having a light shielding ratio of the specified level or more is additionally arranged between the second source layer 920 (e.g., second source layer 620 of FIG. 6) and the fourth source layer 912 (e.g., third source layer 612 of FIG. 6).

According to an embodiment, the first source layer 911 may include a silicon oxide (SiO₂) and improve adhesion between the glass layer 410 and the deposition layer 420. According to an embodiment, the material having a higher optical refractive index than the silicon oxide (SiO₂) may include at least one of, for example, a silicon nitride (Si₃N₄) or a titanium oxide (Ti₃O₅). However, the material is not limited thereto. According to an embodiment, the material having a light shielding ratio of the specified level or more may include, for example, silicon (Si). However, the material is not limited thereto. When the silicon (Si) is included in the deposition layer 420, the existing film (e.g., film 800 of FIG. 8) laminated to the back surface (rear surface) of the window glass 400 may be omitted. In this case, the window glass 400 may include a film or printing layer for preventing scattering instead of the decorative film (e.g., film 800 of FIG. 8). Accordingly, the cost of the product may be reduced, and the effect capable of reducing the total thickness may be presented.

According to an embodiment, the thickness of the third source layer 930 including silicon (Si) may be about 6 nm or less. This is because when the thickness of the third source layer 930 including the silicon (Si) exceeds the specified level (e.g., 6 nm), the conductivity of the silicon (Si) may cause interference in radio communication of an electronic device (e.g., electronic device 200 of FIGS. 2 and 3).

According to an embodiment, the thickness of the glass layer 410 may be about 0.6 cm. According to an embodiment, when the first source layer 911 and the fourth source layer 912 include a silicon oxide (SiO₂), the second source layer 920 includes a silicon nitride (Si₃N₄), and the third source layer 930 includes silicon (Si), the thickness of the first source layer 911 may be about 40 nm, the thickness of the second source layer 920 may be about 110 nm, the thickness of the third source layer 930 may be about 6 nm, and the thickness of the fourth source layer 912 may be about 60 nm.

According to an embodiment, when the first source layer 911 and the fourth source layer 912 include a silicon oxide (SiO₂), the second source layer 920 includes a silicon nitride (Si₃N₄), and the third source layer 930 includes silicon (Si), deposition conditions dependent on the materials may be as shown in Table 2 below. However, the deposition conditions are not limited thereto and may be set in various ways depending on a material forming the thin film.

**[Table 2]**

| Material | Start Pressure (Pa) | Temperature (°C) | Si Power (Kw) | Ar (Sccm) | ICP Power (Kw) | ICP O₂ (Sccm) | ICP N₂ (Sccm) |
|---|---|---|---|---|---|---|---|
| SiO₂ | 4.00E-05 | 150 | 13.5 | 300 | 2 | 450 | 0 |
| Si₃N₄ | 4.00E-05 | 150 | 16 | 240 | 1.5 | 0 | 450 |
| Si | 4.00E-05 | 150 | 11 | 150 | - | - | 200 |

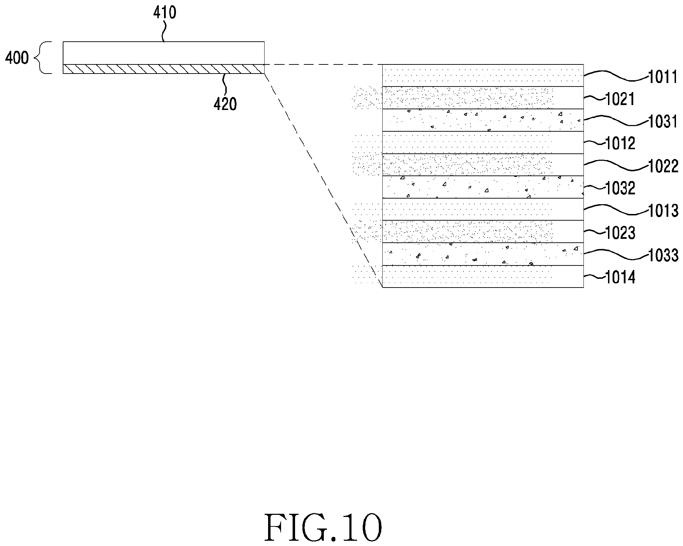

FIG. 10 is a diagram for explaining a deposition layer of window glass including a plurality of source layers including materials having different optical refractive indices and a source layer including a material having a light shielding ratio of a specified level or more according to an embodiment of the disclosure. The window glass 400 of FIG. 10 may be prepared through the manufacturing method of FIG. 4 described above. FIG. 10 may show a structure in which at least one source layer including a silicon oxide (SiO₂), at least one source layer including a material having a higher optical refractive index than the silicon oxide (SiO₂), and at least one source layer including a material having a light shielding ratio of a specified level or more are additionally arranged in the deposition layer 420 structure of FIG. 9. Referring to FIG. 10, the window glass 400 may include a glass layer 410 and a deposition layer 420. According to an embodiment, the deposition layer 420 may include a thin film formed on the rear surface of the glass layer 410 through a sputtering method.

According to an embodiment, the deposition layer 420 may include a first source layer 1011 formed on the surface of the glass layer 410 and including a silicon oxide (SiO₂), a second source layer 1021 laminated on the rear surface of the first source layer 1011 and including a material having a higher optical refractive index than the silicon oxide (SiO₂), a third source layer 1031 laminated on the rear surface of the second source layer 1021 and including a material having a light shielding ratio of a specified level or more, a fourth source layer 1012 laminated on the rear surface of the third source layer 1031 and including the silicon oxide (SiO₂), a fifth source layer 1022 laminated on the rear surface of the fourth source layer 1012 and including a material having a higher optical refractive index than the silicon oxide (SiO₂), a sixth source layer 1032 laminated on the rear surface of the fifth source layer 1022 and including a material having a light shielding ratio of the specified level or more, a seventh source layer 1013 laminated on the rear surface of the sixth source layer 1032 and including the silicon oxide (SiO₂), an eighth source layer 1023 laminated on the rear surface of the seventh source layer 1013 and including a material having a higher optical refractive index than the silicon oxide (SiO₂), a ninth source layer 1033 laminated on the rear surface of the eighth source layer 1023 and including a material having a light shielding ratio of the specified level or more, and a tenth source layer 1014 laminated on the rear surface of the ninth source layer 1033 and including the silicon oxide (SiO₂). For example, compared to the deposition layer 420 of FIG. 9, the deposition layer 420 of FIG. 10 may have a structure in which the fourth source layer 1012 including the silicon oxide (SiO₂), the fifth source layer 1022 including the material having a higher optical refractive index than the silicon oxide (SiO₂), the sixth source layer 1032 including the material having a light shielding ratio of the specified level or more, the seventh source layer 1013 including the silicon oxide (SiO₂), the eighth source layer 1023 including the material having a higher optical refractive index than the silicon oxide (SiO₂), and the ninth source layer 1033 including the material having a light shielding ratio of the specified level or more are additionally arranged between the third source layer 1031 (e.g., third source layer 920 of FIG. 9) and the tenth source layer 1014 (e.g., fourth source layer 912 of FIG. 9). However, the types and numbers of the additionally arranged source layers are not limited thereto. In addition, the plurality of source layers including the silicon oxide (SiO₂), the plurality of source layers including the material having a higher optical refractive index than the silicon oxide (SiO₂), and the plurality of source layers including the material having a light shielding ratio of the specified level or more may be alternately laminated between the third source layer 1031 and the tenth source layer 1014.

According to an embodiment, the first source layer 1011 may include a silicon oxide (SiO₂) and improve adhesion between the glass layer 410 and the deposition layer 420.

According to an embodiment, the material having a higher optical refractive index than the silicon oxide (SiO₂) may include, for example, at least one of a silicon nitride (Si₃N₄) or a titanium oxide (Ti₃O₅). However, the material is not limited thereto. When a source layer having a light optical refractive index less than a specified level such as a silicon oxide (SiO₂), and a source layer having a light optical refractive index of the specified level or more such as a silicon nitride (Si₃N₄) or a titanium oxide (Ti₃O₅), are alternately laminated on the deposition layer 420, the reflectivity of a specific wavelength band of light may be controlled (e.g., increased or decreased) by controlling the thickness of the source layers.

According to an embodiment, the material having a light shielding ratio of the specified level or more may include, for example, silicon (Si). However, the material is not limited thereto. When the silicon (Si) is included in the deposition layer 420, the existing film (e.g., film 800 of FIG. 8) laminated to the back surface (rear surface) of the window glass 400 may be omitted. In this case, the window glass 400 may include a film or printing layer for preventing scattering instead of a decorative film (e.g., film 800 of FIG. 8). Accordingly, the cost of the product may be reduced, and the effect capable of reducing the total thickness may be presented.

According to an embodiment, the thickness of the third source layer 1031, the sixth source layer 1032, and the ninth source layer 1033 each including silicon (Si) may be about 6 nm or less. This is because when the thickness of the source layer including the silicon (Si) exceeds the specified level (e.g., 6 nm), the conductivity of the silicon (Si) may cause interference in radio communication of an electronic device (e.g., electronic device 200 of FIGS. 2 and 3).

According to an embodiment, the thickness of the glass layer 410 may be about 0.6 cm. According to an embodiment, when the first source layer 1011, the fourth source layer 1012, the seventh source layer 1013, and the tenth source layer 1014 include a silicon oxide (SiO₂), the second source layer 1021, the fifth source layer 1022, and the eighth source layer 1023 include a silicon nitride (Si₃N₄), and the third source layer 1031, the sixth source layer 1032, and the ninth source layer 1033 include silicon (Si), the thickness of the first source layer 1011 may be about 40 nm, the thickness of the second source layer 1021 may be about 110 nm, the thickness of the third source layer 1031 may be about 6 nm, the thickness of the fourth source layer 1012 may be about 60 nm, the thickness of the fifth source layer 1022 may be about 80 nm, the thickness of the sixth source layer 1032 may be about 6 nm, the thickness of the seventh source layer 1013 may be about 100 nm, the thickness of the eighth source layer 1023 may be about 25 nm, the thickness of the ninth source layer 1033 may be about 6 nm, and the thickness of the tenth source layer 1014 may be about 40 nm.

According to an embodiment, when the first source layer 1011, the fourth source layer 1012, the seventh source layer 1013, and the tenth source layer 1014 include a silicon oxide (SiO₂), the second source layer 1021, the fifth source layer 1022, and the eighth source layer 1023 include a silicon nitride (Si₃N₄), and the third source layer 1031, the sixth source layer 1032, and the ninth source layer 1033 include silicon (Si), deposition conditions dependent on the materials may be as shown in Table 2 above. However, the deposition conditions are not limited thereto, and may be set in various ways depending on a material forming the thin film.

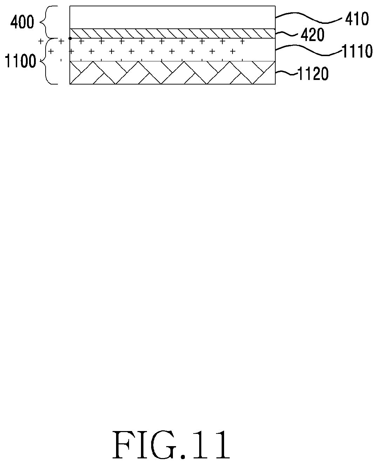

FIG. 11 is a diagram for explaining window glass including a source layer including a material having a light shielding ratio of a specified level or more and a film applied to the window glass according to an embodiment of the disclosure. The window glass 400 of FIG. 11 may correspond to the window glass 400 of FIGS. 9 and 10.

Referring to FIG. 11, a film 1100 may be attached (or laminated) to the rear surface of the window glass 400. According to an embodiment, the film 1100 may be attached (or laminated) to the rear surface of the window glass 400 in a lamination method.

According to an embodiment, the film 1100 may include an adhesive layer 1110 for attaching the film 1100 to the rear surface of a deposition layer 420, and a PET layer 1120 laminated on the rear surface of the adhesive layer 1110. However, the construction of the film 1100 is not limited thereto. According to an embodiment, the film 1100 may further include at least one other component in addition to the components described above.

According to an embodiment, the adhesive layer 1110 may include an optically clear adhesive (OCA). According to an embodiment, the PET layer 1120 may present a scattering prevention function.

Compared to the film 800 of FIG. 8, the film 1100 of FIG. 11 may have a structure in which a UV molding layer (e.g., UV molding layer 830), a deposition layer (e.g., deposition layer 840), and a printing layer (e.g., printing layer 850) are omitted. This is because the deposition layer 420 of the window glass 400 to which the film 1100 is attached includes a material (e.g., silicon) having a light shielding ratio of a specified level or more. For example, when the material having a light shielding ratio of the specified level or more is included in the deposition layer 420, the window glass 400 may include a scattering prevention film (e.g., film 1100 of FIG. 11) instead of a decorative film (e.g., film 800 of FIG. 8). Accordingly, the cost of the product may be reduced, and the effect capable of reducing the total thickness may be presented.

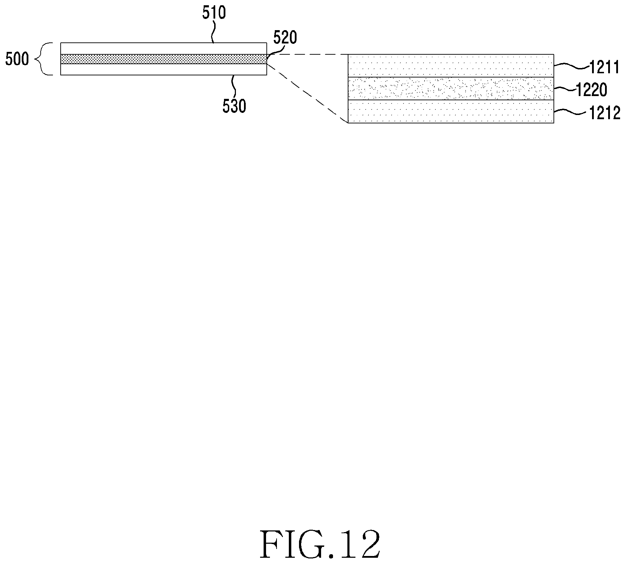

FIG. 12 is a diagram for explaining a deposition layer of window glass including a plurality of glass according to an embodiment of the disclosure. The window glass 500 of FIG. 12 may be prepared through the manufacturing method of FIG. 5 described above. FIG. 12 may show a structure in which a glass layer is additionally arranged in the window glass 400 structure of FIG. 6.

Referring to FIG. 12, the window glass 500 may include a first glass layer 510, a deposition layer 520, and a second glass layer 530. According to an embodiment, the deposition layer 520 may include a thin film formed on the rear surface of the first glass layer 510 through a sputtering method. According to an embodiment, the second glass layer 530 may be attached to the rear surface of the deposition layer 520 after the deposition layer 520 is formed on the rear surface of the first glass layer 510. The first glass layer 510 and the second glass layer 530 may include the same or similar materials. Since the window glass 500 includes the second glass layer 530 paired with the first glass layer 510, a tensile or compressive stress may be reduced during thermal molding of the window glass 500 and present an effect of preventing cracks from occurring in a curved portion.

According to an embodiment, the deposition layer 520 may include a first source layer 1211 formed on the surface of the first glass layer 510 and including a silicon oxide (SiO₂), a second source layer 1220 laminated on the rear surface of the first source layer 1211 and including a material having a higher optical refractive index than the silicon oxide (SiO₂), and a third source layer 1212 laminated on the rear surface of the second source layer 1220 and including the silicon oxide (SiO₂). According to an embodiment, the first source layer 1211 may include a silicon oxide (SiO₂) and improve adhesion between the first glass layer 510 and the deposition layer 520. According to an embodiment, the third source layer 1212 may include a silicon oxide (SiO₂) and improve adhesion between the second glass layer 530 and the deposition layer 520. According to an embodiment, the material having a higher optical refractive index than the silicon oxide (SiO₂) may include at least one of, for example, a silicon nitride (Si₃N₄) or a titanium oxide (Ti₃O₅). However, the material is not limited thereto.

According to an embodiment, the thickness of the first glass layer 510 and the second glass layer 530 may be about 0.3 cm. According to an embodiment, when the first source layer 1211 and the third source layer 1212 include a silicon oxide (SiO₂) and the second source layer 1220 includes a silicon nitride (Si₃N₄), the thickness of the first source layer 1211 may be about 40 nm, the thickness of the second source layer 1220 may be about 110 nm, and the thickness of the third source layer 1212 may be about 45 nm.

According to an embodiment, when the first source layer 1211 and the third source layer 1212 include a silicon oxide (SiO₂) and the second source layer 1220 includes a silicon nitride (Si₃N₄), deposition conditions dependent on the materials may be as shown in Table 1 above. However, the deposition conditions are not limited thereto and may be set in various ways according to a material forming the thin film.

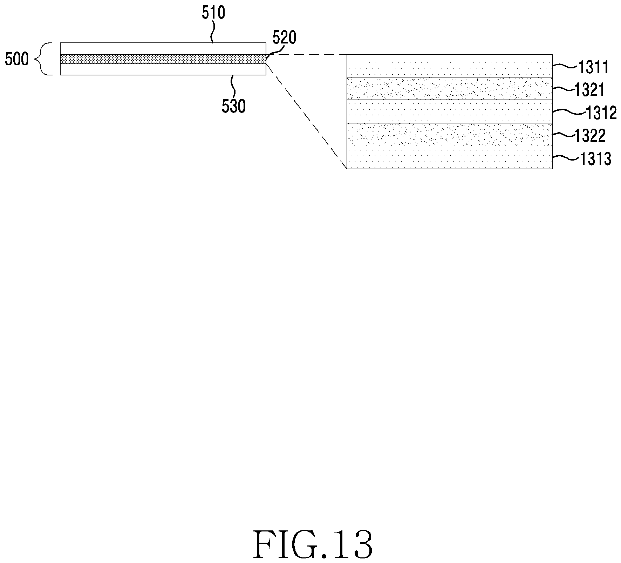

FIG. 13 is a diagram for explaining a deposition layer of window glass including a plurality of glass and a plurality of source layers including materials having different optical refractive indices according to an embodiment of the disclosure. The window glass 500 of FIG. 13 may be prepared through the manufacturing method of FIG. 5 described above. FIG. 13 may show a structure in which at least one source layer including a silicon oxide (SiO₂) and at least one source layer including a material having a higher optical refractive index than the silicon oxide (SiO₂) are additionally arranged in the deposition layer 520 structure of FIG. 12.

Referring to FIG. 13, the window glass 500 may include a first glass layer 510, a deposition layer 520, and a second glass layer 530. According to an embodiment, the deposition layer 520 may include a thin film formed on the rear surface of the first glass layer 510 through a sputtering method. According to an embodiment, the second glass layer 530 may be attached to the rear surface of the deposition layer 520 after the deposition layer 520 is formed on the rear surface of the first glass layer 510. The first glass layer 510 and the second glass layer 530 may include the same or similar materials. Since the window glass 500 includes the second glass layer 530 paired with the first glass layer 510, a tensile or compressive stress may be reduced during thermal molding of the window glass 500 and present an effect of preventing cracks from occurring in a curved portion.

According to an embodiment, the deposition layer 520 may include a first source layer 1311 formed on the surface of the first glass layer 510 and including a silicon oxide (SiO₂), a second source layer 1321 laminated on the rear surface of the first source layer 1311 and including a material having a higher optical refractive index than the silicon oxide (SiO₂), a third source layer 1312 laminated on the rear surface of the second source layer 1321 and including the silicon oxide (SiO₂), a fourth source layer 1322 laminated on the rear surface of the third source layer 1312 and including a material having a higher optical refractive index than the silicon oxide (SiO₂), and a fifth source layer 1313 laminated on the rear surface of the fourth source layer 1322 and including the silicon oxide (SiO₂). For example, compared to the deposition layer 520 of FIG. 12, the deposition layer 520 of FIG. 13 may have a structure in which the third source layer 1312 including the silicon oxide (SiO₂) and the fourth source layer 1322 including a material having a higher optical refractive index than the silicon oxide (SiO₂) are additionally arranged between the second source layer 1321 (e.g., second source layer 1220 of FIG. 12) and the fifth source layer 1313 (e.g., third source layer 1212 of FIG. 12). However, the types and numbers of the additionally arranged source layers are not limited thereto. In an example, a plurality of source layers(e.g., third source layer 1312) including the silicon oxide (SiO₂) and a plurality of source layers (e.g., fourth source layer 1322) including the material having a higher optical refractive index than the silicon oxide (SiO₂) may be included, and the plurality of source layers including the silicon oxide (SiO₂) and the plurality of source layers including the material having a higher optical refractive index than the silicon oxide (SiO₂) may be alternately laminated between the second source layer 1321 and the fifth source layer 1313.

According to an embodiment, the first source layer 1311 may include a silicon oxide (SiO₂) and improve adhesion between the first glass layer 510 and the deposition layer 520. According to an embodiment, the fifth source layer 1313 may include a silicon oxide (SiO₂) and improve adhesion between the second glass layer 530 and the deposition layer 520. According to an embodiment, a material having a greater optical refractive index than the silicon oxide (SiO₂) may include, for example, at least one of a silicon nitride (Si₃N₄) or a titanium oxide (Ti₃O₅). However, the material is not limited thereto.

When a source layer having an optical refractive index less than a specified level such as a silicon oxide (SiO₂), and a source layer having an optical refractive index of the specified level or more such as a silicon nitride (Si₃N₄) or a titanium oxide (Ti₃O₅), are alternately laminated on the deposition layer 520, the reflectivity of a specific wavelength band of light may be controlled (e.g., increased or decreased) by controlling the thickness of the source layers.

According to an embodiment, the thickness of the first glass layer 510 and the second glass layer 530 may be about 0.3 cm. According to an embodiment, when the first source layer 1311, the third source layer 1312, and the fifth source layer 1313 include the silicon oxide (SiO₂), and the second source layer 1321 and the fourth source layer 1322 include the silicon nitride (Si₃N₄), the thickness of the first source layer 1311 may be about 40 nm, the thickness of the second source layer 1321 may be about 110 nm, the thickness of the third source layer 1312 may be about 110 nm, the thickness of the fourth source layer 1322 may be about 60 nm, and the thickness of the fifth source layer 1313 may be about 25 nm.

According to an embodiment, when the first source layer 1311, the third source layer 1312, and the fifth source layer 1313 include the silicon oxide (SiO₂), and the second source layer 1321 and the fourth source layer 1322 include the silicon nitride (Si₃N₄), deposition conditions dependent on the materials may be as shown in Table 1 above. However, the deposition conditions are not limited thereto, and may be variously set according to a material forming the thin film.

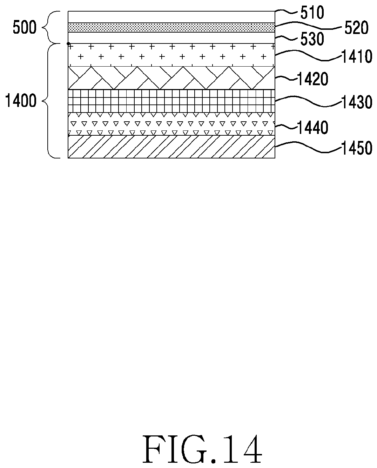

FIG. 14 is a diagram for explaining window glass including a plurality of glass and a film applied to the window glass according to an embodiment of the disclosure. The window glass 500 of FIG. 14 may correspond to the window glass 500 of FIGS. 12 and 13.

Referring to FIG. 14, a film 1400 may be attached (or laminated) to the rear surface of the window glass 500. According to an embodiment, the film 1400 may be attached (or laminated) to the rear surface of the window glass 500 in a lamination method.

According to an embodiment, the film 1400 may include an adhesive layer 1410 for attaching the film 1400 to the rear surface of a second glass layer 530, a PET layer 1420 laminated on the rear surface of the adhesive layer 1410, a UV molding layer 1430 laminated on the rear surface of the PET layer 1420, a deposition layer 1440 laminated on the rear surface of the UV molding layer 1430, and a printing layer 1450 laminated on the rear surface of the deposition layer 1440. However, the construction of the film 1400 is not limited thereto. According to an embodiment, the film 1400 may omit at least one of the above-described components, and may further include at least one other component.

According to an embodiment, the adhesive layer 1410 may include an optically clear adhesive (OCA). According to an embodiment, the PET layer 1420 may present a scattering prevention function.

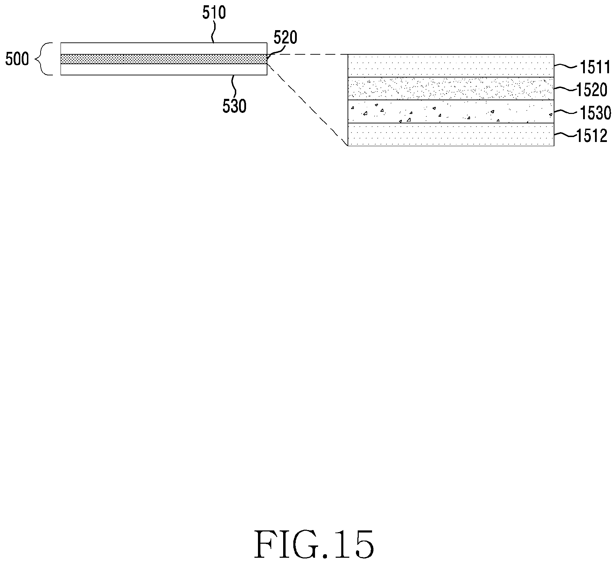

FIG. 15 is a diagram for explaining a deposition layer of window glass including a plurality of glass and including a source layer including a material having a light shielding ratio of a specified level or more according to an embodiment of the disclosure. The window glass 500 of FIG. 15 may be prepared through the manufacturing method of FIG. 5 described above. FIG. 15 may show a structure in which the source layer including the material having a light shielding ratio of the specified level or more is additionally arranged in the deposition layer 520 structure of FIG. 12.

Referring to FIG. 15, the window glass 500 may include a first glass layer 510, a deposition layer 520, and a second glass layer 530. According to an embodiment, the deposition layer 520 may include a thin film formed on the rear surface of the first glass layer 510 through a sputtering method. According to an embodiment, the second glass layer 530 may be attached to the rear surface of the deposition layer 520 after the deposition layer 520 is formed on the rear surface of the first glass layer 510. The first glass layer 510 and the second glass layer 530 may include the same or similar materials. Since the window glass 500 includes the second glass layer 530 paired with the first glass layer 510, a tensile or compressive stress may be reduced during thermal molding of the window glass 500 and present an effect of preventing cracks from occurring in a curved portion.

According to an embodiment, the deposition layer 520 may include a first source layer 1511 formed on the surface of the first glass layer 510 and including a silicon oxide (SiO₂), a second source layer 1520 laminated on the rear surface of the first source layer 1511 and including a material having a higher optical refractive index than the silicon oxide (SiO₂), a third source layer 1530 laminated on the rear surface of the second source layer 1520 and including a material having a light shielding ratio of a specified level or more, and a fourth source layer 1512 laminated on the rear surface of the third source layer 1530 and including the silicon oxide (SiO₂). For example, compared to the deposition layer 520 of FIG. 12, the deposition layer 520 of FIG. 15 may have a structure in which the third source layer 1530 including the material having a light shielding ratio of the specified level or more is additionally arranged between the second source layer 1520 (e.g., second source layer 1220 of FIG. 12) and the fourth source layer 1512 (e.g., third source layer 1212 of FIG. 12).

According to an embodiment, the first source layer 1511 may include a silicon oxide (SiO₂) and improve adhesion between the first glass layer 510 and the deposition layer 520. According to an embodiment, the fourth source layer 1512 may include a silicon oxide (SiO₂) and improve the adhesion between the second glass layer 530 and the deposition layer 520. According to an embodiment, the material having a higher optical refractive index than the silicon oxide (SiO₂) may include, for example, at least one of a silicon nitride (Si₃N₄) or a titanium oxide (Ti₃O₅). However, the material is not limited thereto. According to an embodiment, the material having a light shielding ratio of the specified level or more may include, for example, silicon (Si). However, the material is not limited thereto. When the silicon (Si) is included in the deposition layer 520, the existing film (e.g., film 1400 of FIG. 14) laminated to the back surface (rear surface) of the window glass 500 may be omitted. In this case, the window glass 500 may include a film or printing layer for preventing scattering instead of a decorative film (e.g., film 1400 of FIG. 14). Accordingly, the cost of the product may be reduced, and the effect capable of reducing the total thickness may be presented.

According to an embodiment, the thickness of the third source layer 1530 including the silicon (Si) may be about 6 nm or less. This is because when the thickness of the third source layer 1530 including the silicon (Si) exceeds the specified level (e.g., 6 nm), the conductivity of the silicon (Si) may cause interference in radio communication of an electronic device (e.g., electronic device 200 of FIGS. 2 and 3).

According to an embodiment, the thickness of the first glass layer 510 and the second glass layer 530 may be about 0.3 cm. According to an embodiment, when the first source layer 1511 and the fourth source layer 1512 include a silicon oxide (SiO₂), the second source layer 1520 includes a silicon nitride (Si₃N₄), and the third source layer 1530 includes silicon (Si), the thickness of the first source layer 1511 may be about 40 nm, the thickness of the second source layer 1520 may be about 110 nm, the thickness of the third source layer 1530 may be about 6 nm, and the thickness of the fourth source layer 1512 may be about 60 nm.

According to an embodiment, when the first source layer 1511 and the fourth source layer 1512 include a silicon oxide (SiO₂), the second source layer 1520 includes a silicon nitride (Si₃N₄), and the third source layer 1530 includes silicon (Si), deposition conditions dependent on the materials may be as shown in Table 2 above. However, the deposition conditions are not limited thereto and may be set in various ways depending on a material forming the thin film.

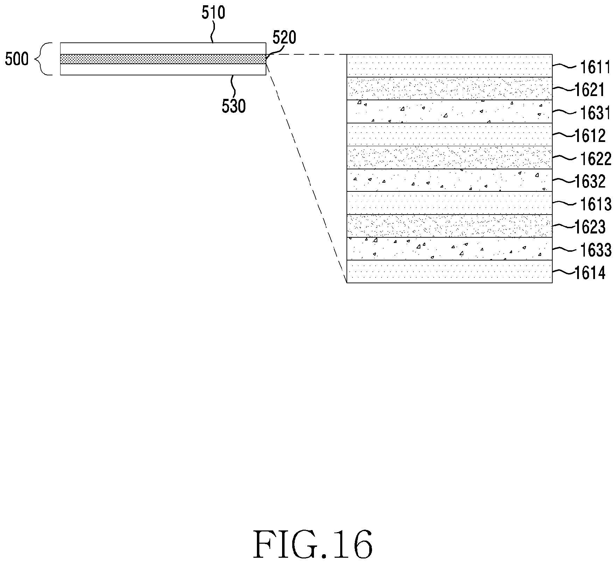

FIG. 16 is a diagram for explaining a deposition layer of window glass including a plurality of glass and including a plurality of source layers including materials having different optical refractive indices and a source layer including a material having a light shielding ratio of a specified level or more according to an embodiment of the disclosure. The window glass 500 of FIG. 16 may be prepared through the manufacturing method of FIG. 5 described above. FIG. 16 may show a structure in which at least one source layer including a silicon oxide (SiO₂), at least one source layer including a material having a higher optical refractive index than the silicon oxide (SiO₂), and at least one source layer including a material having a light shielding ratio of a specified level or more are additionally arranged in the deposition layer 520 structure of FIG. 15.

Referring to FIG. 16, the window glass 500 may include a first glass layer 510, a deposition layer 520, and a second glass layer 530. According to an embodiment, the deposition layer 520 may include a thin film formed on the rear surface of the first glass layer 510 through a sputtering method. According to an embodiment, the second glass layer 530 may be attached to the rear surface of the deposition layer 520 after the deposition layer 520 is formed on the rear surface of the first glass layer 510. The first glass layer 510 and the second glass layer 530 may include the same or similar materials. Since the window glass 500 includes the second glass layer 530 paired with the first glass layer 510, a tensile or compressive stress may be reduced during thermal molding of the window glass 500 and present an effect of preventing cracks from occurring in a curved portion.

According to an embodiment, the deposition layer 520 may include a first source layer 1611 formed on the surface of the first glass layer 510 and including a silicon oxide (SiO₂), a second source layer 1621 laminated on the rear surface of the first source layer 1611 and including a material having a higher optical refractive index than the silicon oxide (SiO₂), a third source layer 1631 laminated on the rear surface of the second source layer 1621 and including a material having a light shielding ratio of a specified level or more, a fourth source layer 1612 laminated on the rear surface of the third source layer 1631 and including the silicon oxide (SiO₂), a fifth source layer 1622 laminated on the rear surface of the fourth source layer 1612 and including a material having a higher optical refractive index than the silicon oxide (SiO₂), a sixth source layer 1632 laminated on the rear surface of the fifth source layer 1622 and including a material having a light shielding ratio of the specified level or more, a seventh source layer 1613 laminated on the rear surface of the sixth source layer 1632 and including the silicon oxide (SiO₂), an eighth source layer 1623 laminated on the rear surface of the seventh source layer 1613 and including a material having a higher optical refractive index than the silicon oxide (SiO₂), a ninth source layer 1633 laminated on the rear surface of the eighth source layer 1623 and including a material having a light shielding ratio of the specified level or more, and a tenth source layer 1614 laminated on the rear surface of the ninth source layer 1633 and including the silicon oxide (SiO₂). For example, compared to the deposition layer 520 of FIG. 15, the deposition layer 520 of FIG. 16 may have a structure in which the fourth source layer 1612 including the silicon oxide (SiO₂), the fifth source layer 1622 including the material having a higher optical refractive index than the silicon oxide (SiO₂), the sixth source layer 1632 including the material having a light shielding ratio of the specified level or more, the seventh source layer 1613 including the silicon oxide (SiO₂), the eighth source layer 1623 including the material having a higher optical refractive index than the silicon oxide (SiO₂), and the ninth source layer 1633 including the material having a light shielding ratio of the specified level or more are additionally arranged between the third source layer 1631 (e.g., third source layer 1520 of FIG. 15) and the tenth source layer 1614 (e.g., fourth source layer 1512 of FIG. 15). However, the types and numbers of the additionally arranged source layers are not limited thereto. In addition, the plurality of source layers including the silicon oxide (SiO₂), the plurality of source layers including the material having a higher optical refractive index than the silicon oxide (SiO₂), and the plurality of source layers including the material having a light shielding rate of the specified level or more may be alternately laminated between the third source layer 1631 and the tenth source layer 1614.

According to an embodiment, the first source layer 1611 may include the silicon oxide (SiO₂) and improve adhesion between the first glass layer 510 and the deposition layer 520. According to an embodiment, the tenth source layer 1614 may include the silicon oxide (SiO₂) and improve adhesion between the second glass layer 530 and the deposition layer 520.

According to an embodiment, the material having a higher optical refractive index than the silicon oxide (SiO₂) may include, for example, at least one of a silicon nitride (Si₃N₄) or a titanium oxide (Ti₃O₅). However, the material is not limited thereto. When a source layer having an optical refractive index less than a specified level such as a silicon oxide (SiO₂), and a source layer having an optical refractive index of the specified level or more such as a silicon nitride (Si₃N₄) or a titanium oxide (Ti₃O₅), are alternately laminated on the deposition layer 520, the reflectivity of a specific wavelength band of light may be controlled (e.g., increased or decreased) by controlling the thickness of the source layers.

According to an embodiment, the material having a light shielding ratio of the specified level or more may include, for example, silicon (Si). However, the material is not limited thereto. When the silicon (Si) is included in the deposition layer 520, the existing film (e.g., film 1400 of FIG. 14) laminated to the back surface (rear surface) of the window glass 500 may be omitted. In this case, the window glass 500 may include a film or printing layer for preventing scattering instead of a decorative film (e.g., film 1400 of FIG. 14). Accordingly, the cost of the product may be reduced, and the effect capable of reducing the total thickness may be presented.

According to an embodiment, the thickness of the third source layer 1631, the sixth source layer 1632, and the ninth source layer 1633 including each the silicon (Si) may be about 6 nm or less. This is because when the thickness of the source layer including the silicon (Si) exceeds the specified level (e.g., 6 nm), the conductivity of the silicon (Si) may cause interference in radio communication of an electronic device (e.g., electronic device 200 of FIGS. 2 and 3).

According to an embodiment, the thickness of the first glass layer 510 and the second glass layer 530 may be about 0.6 cm. According to an embodiment, when the first source layer 1611, the fourth source layer 1612, the seventh source layer 1613, and the tenth source layer 1614 include the silicon oxide (SiO₂), the second source layer 1621, the fifth source layer 1622, and the eighth source layer 1623 include the silicon nitride (Si₃N₄), and the third source layer 1631, the sixth source layer 1632, and the ninth source layer 1633 include the silicon (Si), the thickness of the first source layer 1611 may be about 40 nm, the thickness of the second source layer 1621 may be about 110 nm, the thickness of the third source layer 1631 may be about 6 nm, the thickness of the fourth source layer 1612 may be about 60 nm, the thickness of the fifth source layer 1622 may be about 80 nm, the thickness of the sixth source layer 1632 may be about 6 nm, the thickness of the seventh source layer 1613 may be about 100 nm, the thickness of the eighth source layer 1623 may be about 25 nm, the thickness of the ninth source layer 1633 may be about 6 nm, and the thickness of the tenth source layer 1614 may be about 40 nm.

According to an embodiment, when the first source layer 1611, the fourth source layer 1612, the seventh source layer 1613, and the tenth source layer 1614 include the silicon oxide (SiO₂), the second source layer 1621, the fifth source layer 1622, and the eighth source layer 1623 include the silicon nitride (Si₃N₄), and the third source layer 1631, the sixth source layer 1632, and the ninth source layer 1633 include the silicon (Si), deposition conditions dependent on the materials may be as shown in Table 2 above. However, the deposition conditions are not limited thereto, and may be variously set according to a material forming the thin film.

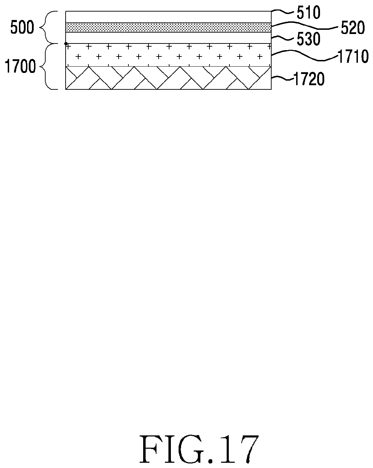

FIG. 17 is a diagram for explaining window glass including a plurality of glass and including a source layer including a material having a light shielding ratio of a specified level or more, and a film applied to the window glass, according to an embodiment of the disclosure. The window glass 500 of FIG. 17 may correspond to the window glass 500 of FIGS. 15 and 16.

Referring to FIG. 17, a film 1700 may be attached (or laminated) to the rear surface of the window glass 500. According to an embodiment, the film 1700 may be attached (or laminated) to the rear surface of the window glass 500 in a lamination method.

According to an embodiment, the film 1700 may include an adhesive layer 1710 for attaching the film 1700 to the rear surface of the second glass layer 530, and a PET layer 1720 laminated to the rear surface of the adhesive layer 1710. However, the construction of the film 1700 is not limited thereto. According to an embodiment, the film 1700 may further include at least one other component in addition to the components described above.

According to an embodiment, the adhesive layer 1710 may include an optically clear adhesive (OCA). According to an embodiment, the PET layer 1720 may present a scattering prevention function.

Compared to the film 1400 of FIG. 14, the film 1700 of FIG. 17 may have a structure in which a UV molding layer (e.g., UV molding layer 1430), a deposition layer (e.g., deposition layer 1440), and a printing layer (e.g., printing layer 1450) are omitted. This is because the deposition layer 520 of the window glass 500 to which the film 1700 is attached includes a material (e.g., silicon) having a light shielding ratio of a specified level or more. For example, when the material having a light shielding ratio of the specified level or more is included in the deposition layer 520, the window glass 500 may include a scattering prevention film (e.g., film 1700 of FIG. 17) instead of a decorative film (e.g., film 1400 of FIG. 14). Accordingly, the cost of the product may be reduced, and the effect capable of reducing the total thickness may be presented.

As described above, according to various embodiments, window glass may include a glass layer, and a deposition layer disposed on the rear surface of the glass layer. The deposition layer may include a first source layer formed on the surface of the glass layer and including a silicon oxide (SiO₂), a second source layer laminated on the rear surface of the first source layer and including a first material having a higher optical refractive index than the silicon oxide (SiO₂), and a third source layer laminated on the rear surface of the second source layer and including the silicon oxide (SiO₂).

According to various embodiments, the deposition layer may include a thin film formed on the rear surface of the glass layer through a sputtering method. The density of the thin film may be about 2.8 g/cm³ to about 3.3 g/cm³.

According to various embodiments, the deposition layer may further include at least one fourth source layer including the silicon oxide (SiO₂) and at least one fifth source layer including the first material. The at least one fourth source layer and the at least one fifth source layer may be alternately laminated between the second source layer and the third source layer.

According to various embodiments, the window glass may further include a film disposed on the rear surface of the deposition layer. The film may include an adhesive layer for attaching the film to the rear surface of the deposition layer, a PET layer laminated on the rear surface of the adhesive layer, a UV molding layer laminated on the rear surface of the PET layer, another deposition layer laminated on the rear surface of the UV molding layer, and a printing layer laminated on the rear surface of the another deposition layer.

According to various embodiments, the deposition layer may further include a fourth source layer arranged between the second source layer and the third source layer and including a second material having a light shielding ratio of a specified level or more.

According to various embodiments, the deposition layer may further include at least one fifth source layer including the silicon oxide (SiO₂), at least one sixth source layer including the first material, and at least one seventh source layer including the second material. The at least one fifth source layer, the at least one sixth source layer, and the at least one seventh source layer may be alternately laminated between the fourth source layer and the third source layer.

According to various embodiments, the thickness of the fourth source layer and the at least one seventh source layer may be about 6 nm or less.

According to various embodiments, the window glass may further include a film disposed on the rear surface of the deposition layer. The film may include an adhesive layer for attaching the film to the rear surface of the deposition layer, and a PET layer laminated on the rear surface of the adhesive layer.

According to various embodiments, the window glass may further include another glass layer disposed on the rear surface of the deposition layer.

As described above, according to various embodiments, an electronic device may include a housing including window glass including a curved portion bending and extending from one surface of the electronic device toward the other surface of the electronic device while forming the one surface of the electronic device, and a plate forming the other surface of the electronic device, and a display arranged between the window glass and the plate. The window glass may include a glass layer and a deposition layer disposed on the rear surface of the glass layer. The deposition layer may include a first source layer formed on the surface of the glass layer and including a silicon oxide (SiO₂), a second source layer laminated on the rear surface of the first source layer and including a first material having a higher optical refractive index than the silicon oxide (SiO₂), and a third source layer laminated on the rear surface of the second source layer and including the silicon oxide (SiO₂).

According to various embodiments, the deposition layer may include a thin film formed on the rear surface of the glass layer through a sputtering method. The density of the thin film may be about 2.8 g/cm³ to about 3.3 g/cm³.

According to various embodiments, the deposition layer may further include at least one fourth source layer including the silicon oxide (SiO₂) and at least one fifth source layer including the first material. The at least one fourth source layer and the at least one fifth source layer may be alternately laminated between the second source layer and the third source layer.

According to various embodiments, the window glass may further include a film disposed on the rear surface of the deposition layer. The film may include an adhesive layer for attaching the film to the rear surface of the deposition layer, a PET layer laminated on the rear surface of the adhesive layer, a UV molding layer laminated on the rear surface of the PET layer, another deposition layer laminated on the rear surface of the UV molding layer, and a printing layer laminated on the rear surface of the another deposition layer.

According to various embodiments, the deposition layer may further include a fourth source layer arranged between the second source layer and the third source layer and including a second material having a light shielding ratio of a specified level or more.

According to various embodiments, the deposition layer may further include at least one fifth source layer including the silicon oxide (SiO₂), at least one sixth source layer including the first material, and at least one seventh source layer including the second material. The at least one fifth source layer, the at least one sixth source layer, and the at least one seventh source layer may be alternately laminated between the fourth source layer and the third source layer.

According to various embodiments, the thickness of the fourth source layer and the at least one seventh source layer may be about 6 nm or less.

According to various embodiments, the window glass may further include a film disposed on the rear surface of the deposition layer. The film may include an adhesive layer for attaching the film to the rear surface of the deposition layer, and a PET layer laminated on the rear surface of the adhesive layer.

According to various embodiments, the window glass may further include another glass layer disposed on the rear surface of the deposition layer.

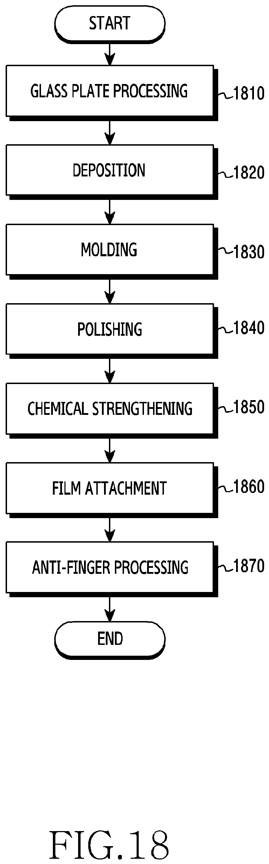

FIG. 18 is a diagram for explaining a method for manufacturing window glass according to an embodiment of the disclosure. The method for manufacturing the window glass of FIG. 18 may include a part of the method for manufacturing the window glass 400 of FIG. 4.

Referring to FIG. 18, in operation 1810, a glass plate may be processed to prepare glass (e.g., glass layer 410 of FIG. 4) suitable for an electronic device (e.g., electronic device 200 of FIGS. 2 and 3). In an example, the glass plate may be CNC (computerized numerical control) processed to fit the size and shape of a housing of the electronic device.

In operation 1820, a deposition process may be performed to form a thin film (e.g., deposition layer 420 of FIG. 4) on the rear surface of the prepared glass. According to an embodiment, the deposition process may use an ICP type sputtering method. For example, in the deposition process, the thin film may be formed on the rear surface of the glass through the ICP type sputtering method. The ICP sputtering method is a type of physical vapor deposition (PVD) method, and may include a method in which while a drum rotates at a high speed, a material sputtered with primary cation (e.g., Ar⁺) is deposited on the glass and then reacts with plasma gas in a plasma source zone and forms an oxide or nitride. In an example, in the ICP type sputtering method, a Si₃N₄ thin film may be implemented by first depositing silicon (Si) by DC-RF sputtering and then moving the sample to a section where an ICP source is located in the same chamber and nitriding the previously deposited silicon (Si) thin film through high-density nitrogen plasma (ICP plasma) treatment.

According to an embodiment, the thin film may be formed by including any one of a silicon oxide (SiO₂) and a silicon nitride (Si₃N₄) or a combination thereof. According to an embodiment, for the sake of adhesion improvement, the deposited thin film may include a first source layer formed on the surface of glass and including the silicon oxide (SiO₂), a second source layer laminated on the rear surface of the first source layer and including a material having a higher optical refractive index than the silicon oxide (SiO₂), and a third source layer laminated on the rear surface of the second source layer and including the silicon oxide (SiO₂). According to an embodiment, at least one fourth source layer including the silicon oxide (SiO₂) and at least one fifth source layer including a material having a higher optical refractive index than the silicon oxide (SiO₂) may be alternately further laminated between the second source layer and the third source layer. The material having a higher optical refractive index than the silicon oxide (SiO₂) may include, for example, at least one of a silicon nitride (Si₃N₄) and a titanium oxide (Ti₃O₅). However, the material is not limited thereto.

When a source layer having an optical refractive index less than a specified level such as a silicon oxide (SiO₂), and a source layer having an optical refractive index of the specified level or more such as a silicon nitride (Si₃N₄) or a titanium oxide (Ti₃O₅), are alternately laminated on the thin film, the reflectivity of a specific wavelength band of light may be controlled (e.g., increased or decreased) by controlling the thickness of the source layers.

According to an embodiment, the thin film may include a sixth source layer including a material having a light shielding ratio of a specified level or more. For example, the sixth source layer may be arranged between the second source layer and the third source layer. The material having a light shielding ratio of the specified level or more may include, for example, silicon (Si). When the silicon (Si) is included in the thin film, the existing film (e.g., decorative film) laminated to the back surface (rear surface) of the window glass may be omitted. In this case, the window glass may include a film or printing layer for preventing scattering instead of the decorative film. Accordingly, the cost of the product may be reduced, and the effect capable of reducing the total thickness may be presented. According to an embodiment, the thickness of the sixth source layer including the silicon (Si) may be about 6 nm or less. This is because when the thickness of the sixth source layer including the silicon (Si) exceeds the specified level (e.g., 6 nm), the conductivity of the silicon (Si) may cause interference in radio communication of an electronic device.

According to an embodiment, at least one seventh source layer including the silicon oxide (SiO₂), at least one eighth source layer including a material having a higher optical refractive index than the silicon oxide (SiO₂), and at least one ninth source layer including the silicon (Si) may be alternately further laminated between the sixth source layer and the third source layer. In this case, the thickness of the sixth source layer and the at least one ninth source layer each including the silicon (Si) may be about 6 nm or less. In addition, the number of source layers including the silicon (Si) may be three or less. For example, the deposition layer 420 may include the sixth source layer and two or less ninth source layers.

In operation 1830, a molding process may be performed to mold, bend and extend, toward the rear surface of the glass, at least one side edge portion of the glass on which the thin film is formed. The molding process may include an inputting step, a preheating step, a molding step, and a cooling step. In addition, equipment for performing the molding process may be a single equipment and may be operated in an inline manner. A molding temperature in the molding step may have a range from, for example, 650 degrees to 760 degrees, but is not limited thereto, and various temperatures may be selected depending on a material included in the thin film, i.e., a thin film material. In an example, when the material included in the thin film includes a silicon oxide (SiO₂) and a silicon nitride (Si₃N₄), the molding temperature may be selected as a thermal molding temperature from a range of about 650 degrees to about 760 degrees or more, which is a molding temperature of glass, to a sintering temperature (e.g., 70% of a melting point) or less of the thin film material. In general, since the movement or flow of atoms constituting the material may occur at the sintering temperature or more, a thermal molding temperature corresponding to the sintering temperature or more of the thin film material may be required for molding the thin film together with the glass, but in reality, molding the thin film material may be possible even at a temperature much lower than the sintering temperature. This is because the thickness of the thin film is in the nano-unit, which is a very thin state, and because usually, when material becomes nano-sized, its physical properties are different from those in a bulk state.

According to an embodiment, in the molding process, a curvature value of a curved portion of window glass may be considered. For example, when the glass on which the thin film is formed is thermally molded, if a curvature of the curved portion of the window glass is equal to or greater than a specified value, a crack may occur in the thin film. Accordingly, in the molding process, the curvature value of the curved portion of the window glass may be set to be within about 4.5. However, the curvature value of the curved portion of the window glass is not limited thereto. According to an embodiment, the curvature value of the curved portion of the window glass may be set differently depending on the type of the thin film material.

By performing the molding process (e.g., operation 1830) of molding at least a portion of the glass in a curved shape after forming the thin film on the rear surface of the glass through the deposition process (e.g., operation 1820), window glass may be presented in which the thickness of the deposited thin film is uniform not only on a flat portion but also on a curved portion. Accordingly, the window glass may be presented in which the dichroic phenomenon in the curved portion is prevented, and the wavelength-specific reflectivity of light is also uniform.

In operation 1840, the surface of the window glass may be polished, and in operation 1850, the surface of the window glass may be chemically strengthened.

In operation 1860, a film may be attached to the window glass. According to an embodiment, when the thin film (e.g., deposition layer) of the window glass does not include a material (e.g., silicon) having a light shielding ratio of a specified level or more, a decorative film (e.g., film 800 of FIG. 8) may be attached to the rear surface of the window glass. The decorative film may include an adhesive layer for attaching to the rear surface of the window glass, a PET layer laminated on the rear surface of the adhesive layer, a UV molding layer laminated on the rear surface of the PET layer, a deposition layer laminated on the rear surface of the UV molding layer, and a printing layer laminated on the rear surface of the deposition layer. However, the construction of the decorative film is not limited thereto. According to an embodiment, the decorative film may omit at least one of the above-described components and may further include at least one other component. According to an embodiment, the adhesive layer may include an optically clear adhesive (OCA). According to an embodiment, the PET layer may present a scattering prevention function.

According to an embodiment, when the thin film (e.g., deposition layer) of the window glass includes the material (e.g., silicon) having a light shielding ratio of the specified level or more, a scattering prevention film (e.g., film 1100 of FIG. 11) may be attached to the rear surface of the window glass. The scattering prevention film may include an adhesive layer for attaching to the rear surface of the window glass, and a PET layer laminated on the rear surface of the adhesive layer. However, the construction of the scattering prevention film is not limited thereto. According to an embodiment, the scattering prevention film may further include at least one other component in addition to the above-described components. According to an embodiment, the adhesive layer may include an optically clear adhesive (OCA). According to an embodiment, the PET layer may present a scattering prevention function.

When the material having a light shielding ratio of the specified level or more is included in the thin film (e.g., deposition layer) of the window glass, the light shielding property of the window glass may be implemented through the material having a light shielding ratio of the specified level or more, so the window glass may include the scattering prevention film instead of the decorative film. Accordingly, the cost of the product may be reduced, and the effect capable of reducing the total thickness may be presented.

In operation 1870, an anti-finger treatment may be applied to the surface of the window glass. For example, an anti-fingerprint coating may be applied to the surface of the window glass.

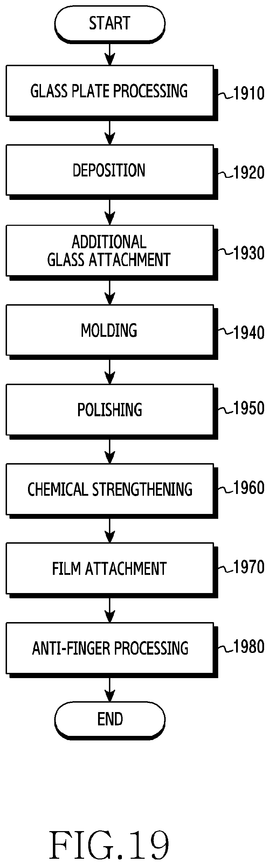

FIG. 19 is a diagram for explaining a method for manufacturing window glass including a plurality of glass according to an embodiment of the disclosure. The method for manufacturing the window glass of FIG. 19 may include a part of the method for manufacturing the window glass 500 of FIG. 5.

Referring to FIG. 19, in operation 1910, a glass plate may be processed to prepare a first glass (e.g., first glass layer 510 of FIG. 5) and a second glass (e.g., second glass layer 530 of FIG. 5) suitable for an electronic device (e.g., electronic device 200 of FIGS. 2 and 3). In an example, the glass plate may be CNC-processed to fit the size and shape of a housing of the electronic device.

In operation 1920, a deposition process may be performed to form a thin film (e.g., deposition layer 520 of FIG. 5) on the rear surface of the prepared first glass. According to an embodiment, the deposition process may use an ICP type sputtering method.

According to an embodiment, the thin film may be formed by including one of a silicon oxide (SiO₂) and a silicon nitride (Si₃N₄) or a combination thereof. According to an embodiment, the deposited thin film may include a first source layer including a silicon oxide (SiO₂) and formed on the surface of the first glass and improving adhesion to the first glass, a second source layer including a material having a higher optical refractive index than the silicon oxide (SiO₂) and laminated on the rear surface of the first source layer, and a third source layer including the silicon oxide (SiO₂) and laminated on the rear surface of the second source layer and improving adhesion to the second glass. According to an embodiment, at least one fourth source layer including the silicon oxide (SiO₂) and at least one fifth source layer including a material having a higher optical refractive index than the silicon oxide (SiO₂) may be alternately further laminated between the second source layer and the third source layer. The material having a higher optical refractive index than the silicon oxide (SiO₂) may include, for example, at least one of a silicon nitride (Si₃N₄) or a titanium oxide (Ti₃O₅). However, the material is not limited thereto.

When a source layer having an optical refractive index less than a specified level such as a silicon oxide (SiO₂), and a source layer having an optical refractive index of the specified level or more such as a silicon nitride (Si₃N₄) or a titanium oxide (Ti₃O₅), are alternately laminated on the thin film, the reflectivity of a specific wavelength band of light may be controlled (e.g., increased or decreased) by controlling the thickness of the source layers.

According to an embodiment, the thin film may include a sixth source layer including a material having a light shielding ratio of a specified level or more. For example, the sixth source layer may be arranged between the second source layer and the third source layer. The material having a light shielding ratio of the specified level or more may include, for example, silicon (Si). When the silicon (Si) is included in the thin film, the existing film (e.g., decorative film) laminated to the back surface (rear surface) of the window glass may be omitted. In this case, the window glass may include a film or printing layer for preventing scattering instead of the decorative film. Accordingly, the cost of the product may be reduced, and the effect capable of reducing the total thickness may be presented. According to an embodiment, the thickness of the sixth source layer including the silicon (Si) may be about 6 nm or less. This is because when the thickness of the sixth source layer including the silicon (Si) exceeds the specified level (e.g., 6 nm), the conductivity of the silicon (Si) may cause interference in radio communication of an electronic device.

According to an embodiment, at least one seventh source layer including the silicon oxide (SiO₂), at least one eighth source layer including a material having a higher optical refractive index than the silicon oxide (SiO₂), and at least one ninth source layer including the silicon (Si) may be alternately further laminated between the sixth source layer and the third source layer. In this case, the thickness of the sixth source layer and the at least one ninth source layer each including the silicon (Si) may be about 6 nm or less. In addition, the number of the source layers including the silicon (Si) may be three or less. For example, the deposition layer 420 may include the sixth source layer and two or less ninth source layers.

In operation 1930, the second glass may be attached to the rear surface of the thin film. Since the window glass includes the second glass paired with the first glass, a tensile or compressive stress may be reduced during thermal forming of the window glass and present an effect of preventing cracks from occurring in a curved portion.

In operation 1940, a molding process may be performed to mold, bend, and extend, toward the rear surface of the window glass, at least one side edge portion of the window glass including the first glass, the thin film, and the second glass. The molding process may include an inputting step, a preheating step, a molding step, and a cooling step. In addition, equipment for performing the molding process may be a single equipment and may be operated in an inline manner. A molding temperature in the molding step may have a range of, for example, 650 degrees to 760 degrees, but is not limited thereto, and various temperatures may be selected depending on a material included in the thin film, i.e., a thin film material. In an example, when the material included in the thin film includes a silicon oxide (SiO₂) and a silicon nitride (Si₃N₄), the molding temperature may be selected as a thermal molding temperature from a range of about 650 degrees to about 760 degrees or more, which is the molding temperature of the glass, to a sintering temperature (e.g., 70% of a melting point) or less of the thin film material. In general, since the movement or flow of atoms constituting the material may occur at the sintering temperature or more, a thermal molding temperature corresponding to a sintering temperature or more of the thin film material may be required for molding the thin film together with the glass, but in reality, molding the thin film material may be possible even at a temperature much lower than the sintering temperature. This is because the thickness of the thin film is in the nano-unit, which is a very thin state, and because usually, when material becomes nano-sized, its physical properties are different from those in a bulk state.

According to an embodiment, in the molding process, a curvature value of a curved portion of the window glass may be considered. For example, when the glass on which the thin film is formed is thermally molded, if a curvature of the curved portion of the window glass is equal to or greater than a specified value, a crack may occur in the thin film. Accordingly, in the molding process, the curvature value of the curved portion of the window glass may be set to be within about 4.5. However, the curvature value of the curved portion of the window glass is not limited thereto. According to an embodiment, the curvature value of the curved portion of the window glass may be set differently depending on the type of the thin film material.

By forming the thin film on the rear surface of the first glass through the deposition process (e.g., operation 1920), attaching the second glass to the rear surface of the thin film (e.g., operation 1930), and then performing the molding process (e.g., operation 1940) of molding at least a portion of the window glass in a curved shape, the window glass may be presented in which the thickness of the deposited thin film is uniform not only on a flat portion but also on the curved portion. Accordingly, the window glass may be presented in which the dichroic phenomenon in the curved portion is prevented, and the wavelength-specific reflectivity of light is also uniform. In addition, since the window glass includes the second glass paired with the first glass, a tensile or compressive stress may be reduced during the thermal molding of the window glass and present an effect of preventing cracks from occurring in the curved portion.

In operation 1950, the surface of the window glass may be polished, and in operation 1960, the surface of the window glass may be chemically strengthened.

In operation 1970, a film may be attached to the window glass. According to an embodiment, when the thin film (e.g., deposition layer) of the window glass does not include a material (e.g., silicon) having a light shielding ratio of a specified level or more, a decorative film (e.g., film 1400 of FIG. 14) may be attached to the rear surface of the window glass. The decorative film may include an adhesive layer for attaching to the rear surface of the window glass, a PET layer laminated on the rear surface of the adhesive layer, a UV molding layer laminated on the rear surface of the PET layer, a deposition layer laminated on the rear surface of the UV molding layer, and a printing layer laminated on the rear surface of the deposition layer. However, the construction of the decorative film is not limited thereto. According to an embodiment, the decorative film may omit at least one of the above-described components and may further include at least one other component. According to an embodiment, the adhesive layer may include an optically clear adhesive (OCA). According to an embodiment, the PET layer may present a scattering prevention function.

According to an embodiment, when the thin film (e.g., deposition layer) of the window glass includes the material (e.g., silicon) having a light shielding ratio of the specified level or more, a scattering prevention film (e.g., film 1700 of FIG. 17) may be attached to the rear surface of the window glass. The scattering prevention film may include an adhesive layer for attaching to the rear surface of the window glass, and a PET layer laminated on the rear surface of the adhesive layer. However, the construction of the scattering prevention film is not limited thereto. According to an embodiment, the scattering prevention film may further include at least one other component in addition to the above-described components. According to an embodiment, the adhesive layer may include an optically clear adhesive (OCA). According to an embodiment, the PET layer may present a scattering prevention function.

When the material having a light shielding ratio of the specified level or more is included in the thin film (e.g., deposition layer) of the window glass, the light shielding property of the window glass may be implemented through the material having a light shielding ratio of the specified level or more, so the window glass may include the scattering prevention film instead of the decorative film. Accordingly, the cost of the product may be reduced, and the effect capable of reducing the total thickness may be presented.

In operation 1980, an anti-finger treatment may be applied to the surface of the window glass. For example, an anti-fingerprint coating may be applied to the surface of the window glass.

As described above, according to various embodiments, the method for manufacturing the window glass may include a deposition process for forming a deposition layer on the rear surface of the glass through an inductively coupled plasma (ICP) sputtering method, and a molding process for molding, bending, and extending, toward the rear surface of the glass, at least one side edge portion of the glass on which the deposition layer is formed.

According to various embodiments, the method for manufacturing the window glass may further include an attachment process for attaching another glass to the rear surface of the deposition layer before the molding process.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. Window glass including:
a glass layer, and
a deposition layer disposed on the rear surface of the glass layer,
wherein the deposition layer includes:
a first source layer formed on the surface of the glass layer and including a silicon oxide (SiO₂);
a second source layer laminated on the rear surface of the first source layer and including a first material having a higher optical refractive index than the silicon oxide (SiO₂); and
a third source layer laminated on the rear surface of the second source layer and including the silicon oxide (SiO₂).

2. The window glass of claim 1, wherein the deposition layer includes a thin film formed on the rear surface of the glass layer through a sputtering method, and
the density of the thin film is 2.8 g/cm³ to 3.3 g/cm³.

3. The window glass of claim 1, wherein the deposition layer further includes at least one fourth source layer including the silicon oxide (SiO₂) and at least one fifth source layer including the first material,
the at least one fourth source layer and the at least one fifth source layer are alternately laminated between the second source layer and the third source layer.

4. The window glass of claim 1, further including a film disposed on the rear surface of the deposition layer,
wherein the film includes:
an adhesive layer for attaching the film to the rear surface of the deposition layer;
a polyethylene terephthalate (PET) layer laminated on the rear surface of the adhesive layer;
a UV molding layer laminated on the rear surface of the PET layer;
another deposition layer laminated on the rear surface of the UV molding layer; and
a printing layer laminated on the rear surface of the another deposition layer.

5. The window glass of claim 1, wherein the deposition layer further includes a fourth source layer arranged between the second source layer and the third source layer and including a second material having a light shielding ratio of a specified level or more.

6. The window glass of claim 5, wherein the deposition layer further includes at least one fifth source layer including the silicon oxide (SiO₂), at least one sixth source layer including the first material, and at least one seventh source layer including the second material, and
the at least one fifth source layer, the at least one sixth source layer, and the at least one seventh source layer are alternately laminated between the fourth source layer and the third source layer.

7. The window glass of claim 6, wherein the thickness of the fourth source layer and the at least one seventh source layer is 6 nm or less.

8. The window glass of claim 5, further including a film disposed on the rear surface of the deposition layer,
wherein the film includes:
an adhesive layer for attaching the film to the rear surface of the deposition layer; and
a polyethylene terephthalate (PET) layer laminated on the rear surface of the adhesive layer.

9. The window glass of claim 1, further including another glass layer disposed on the rear surface of the deposition layer.

10. An electronic device including:
a housing including window glass including a curved portion bending and extending from one surface of the electronic device toward the other surface of the electronic device while forming the one surface of the electronic device, and a plate forming the other surface of the electronic device; and
a display arranged between the window glass and the plate,
wherein the window glass includes a glass layer and a deposition layer disposed on the rear surface of the glass layer, and
the deposition layer includes:
a first source layer formed on the surface of the glass layer and including a silicon oxide (SiO₂);
a second source layer laminated on the rear surface of the first source layer and including a first material having a higher optical refractive index than the silicon oxide (SiO₂); and
a third source layer laminated on the rear surface of the second source layer and including the silicon oxide (SiO₂).

11. A method for manufacturing window glass, including:
a deposition process for forming a deposition layer on the rear surface of glass through an inductively coupled plasma (ICP) sputtering method; and
a molding process for molding, bending, and extending, toward the rear surface, at least one side edge portion of the glass on which the deposition layer is formed.

12. The method for manufacturing the window glass of claim 11, further including an attachment process for attaching another glass to the rear surface of the deposition layer before the molding process.

13. The method for manufacturing the window glass of claim 11, wherein the deposition layer includes:
a first source layer formed on the surface of the glass and including a silicon oxide (SiO₂);
a second source layer laminated on the rear surface of the first source layer and including a first material having a higher optical refractive index than the silicon oxide (SiO₂); and
a third source layer laminated on the rear surface of the second source layer and including the silicon oxide (SiO₂).

14. The method for manufacturing the window glass of claim 13, wherein the deposition layer further includes:
at least one fourth source layer including the silicon oxide (SiO₂) and at least one fifth source layer including the first material; and
the at least one fourth source layer and the at least one fifth source layer are alternately laminated between the second source layer and the third source layer.

15. The method for manufacturing the window glass of claim 11, wherein the deposition layer further includes a fourth source layer arranged between the second source layer and the third source layer and including a second material having a light shielding rate of a specified level or more.
